(19) Europäisches Patentamt
European Patent Office
Office européen des brevets

(11) **EP 3 551 794 B1**

(12) **EUROPEAN PATENT SPECIFICATION**

(45) Date of publication and mention
of the grant of the patent:
**03.02.2021 Bulletin 2021/05**

(21) Application number: **17808512.2**

(22) Date of filing: **06.12.2017**

(51) Int Cl.:
*D04H 1/4291* (2012.01)       *B32B 5/02* (2006.01)
*B32B 5/26* (2006.01)          *C08L 23/12* (2006.01)
*D04H 1/559* (2012.01)         *D04H 1/56* (2006.01)
*D04H 3/007* (2012.01)         *D04H 3/016* (2012.01)
*D04H 13/00* (2006.01)         *D01D 5/098* (2006.01)
*D01F 6/06* (2006.01)

(86) International application number:
**PCT/EP2017/081697**

(87) International publication number:
**WO 2018/104388 (14.06.2018 Gazette 2018/24)**

(54) **MULTILAYER NONWOVEN STRUCTURE**

**MEHRSCHICHTIGE VLIESSTRUKTUR**

**STRUCTURE NON-TISSÉE MULTICOUCHE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2016 EP 16203276**

(43) Date of publication of application:
**16.10.2019 Bulletin 2019/42**

(73) Proprietor: **Borealis AG**
**1220 Vienna (AT)**

(72) Inventors:
• **WANG, Jingbo**
  **4209 Engerwitzdorf (AT)**
• **SARS, Wilhelmus Henricus Adolf**
  **5036 CA Tilburg (NL)**

• **FIEBIG, Joachim**
  **4209 Engerwitzdorf (AT)**
• **VAN PARIDON, Henk**
  **3271 Averbode (BE)**
• **TOBIESON, Gustaf**
  **45144 Uddevalla (SE)**
• **GRESTENBERGER, Georg**
  **3352 St. Peter in der Au (AT)**

(74) Representative: **Lux, Berthold
Maiwald Patentanwalts- und
Rechtsanwaltsgesellschaft mbH
Elisenhof
Elisenstraße 3
80335 München (DE)**

(56) References cited:
**EP-A1- 2 682 505        WO-A1-2016/008749
US-A1- 2008 275 180**

**Description**

The present invention is directed to a nonwoven fabric (NF) comprising at least one inner layer (M) surrounded by at least one outer layer (S), said inner layer (M) comprising melt blown fibers and said outer layer (S) comprising spunbonded fibers, wherein said melt blown fibers and said spunbonded fibers comprise propylene polymers. The present invention is further directed to an article comprising said nonwoven fabric (NF).

Nonwoven polypropylene webs are widely used in filtration and hygiene. In the field of nonwoven polypropylene webs, multilayer structures such as spunbonded/meltblown/ spunbonded (SMS) multilayer structures are commonly used since different requirements must be combined. For example, in the classic SMS structure for hygiene articles, the spunbonded layer is used as support and provides the mechanical properties and the melt blown layer is much thinner and used mainly as functional layer. A good SMS structure should have the combination of good mechanical properties and good barrier properties.

SMS structures are currently produced in a sequential process wherein the first spunbonded layer is made via a first spinneret and the melt blown layer is subsequently deposited on top of the spunbonded layer by means of a melt blown beam, and the second spunbonded layer is further deposited on top of the melt blown layer with a second spinneret so that the three layers are bonded together to obtain the SMS structure. Since these process steps are rather challenging, the properties of the polypropylenes for the spunbonded and the meltblown layers must be adapted accordingly.

US 2008/275180 A1 refers to a polymer material comprising a blend of an isotactic propylene polymer and a syndiotactic propylene polymer wherein the isotactic propylene polymer has a molecular weight distribution (Mw/Mn) of 4.0 or less and a xylene solubles of 2 percent or less, and wherein the polymer material provides a SMS fabric material having a 50% or greater retention of machine direction elongation strength at a radiation dose of 3-5 Mrads. WO 2016/008749 A1 refers to polypropylene composition suitable for the production of meltblown PP fibers comprising (A) a propylene homopolymer, produced with a Ziegler-Natta catalyst (ZN-C), and (B) a polymeric nucleating agent, wherein the polypropylene composition has i) a melt flow rate $MFR_2$(230 °C/2.16 kg) measured according to ISO 1133 of 90 to 5000 g/10min, and ii) a difference between melting temperature (Tm) and crystallization temperature (Tc) (Tm - Tc) of < 45 °C. EP 2 682 505 A1 refers to a fiber comprising a polypropylene obtainable by a process comprising the steps of: (iv) polymerizing propylene in the presence of a catalyst system comprising the product obtained by contacting the following components: (d) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers, (e) an aluminum hydrocarbyl compound, and (f) optionally an external electron donor compound, to obtain a polypropylene precursor having a melt flow rate MFR1; (v) subjecting the thus-obtained polypropylene precursor to visbreaking to obtain a visbroken polypropylene having a melt flow rate MFR2; (vi) spinning the visbroken polypropylene obtained in the previous step; wherein MFR2 is comprised between from 15 to 40 g/10min, the ratio MFR2/MFR1 is comprised between 8 and 18, both MFR1 and MFR2 being measured according to ISO method 1133 (230° C, 2.16 kg).

Thus, there is a need in the art for SMS structures comprising polypropylene showing good barrier properties while the mechanical properties remain on a high level.

Accordingly, it is an object of the present invention to provide a Nonwoven fabric (NF) featured by excellent barrier and mechanical properties.

The finding of the present invention is that a SMS structure comprising a spunbonded layer made of a polypropylene prepared in the presence of a Ziegler-Natta catalyst which is free of phthalic acid esters and a melt blown layer made of a polypropylene of high isotacticity is featured by an increased hydrohead and improved mechanical properties.

Therefore, the present invention is directed to a nonwoven fabric (NF), as defined in claim 1.

According to one embodiment of the present invention, the first propylene polymer (PP1) and/or the second propylene polymer (PP2) are propylene homopolymers.

According to another embodiment of the present invention, the first propylene polymer (PP1) and/or the second propylene polymer (PP2) are visbroken.

According to still another embodiment of the present invention, the first propylene polymer (PP1) and/or the second propylene polymer (PP2) fulfil inequation (I)

$$\frac{MFR(final)}{MFR(initial)} > 5 \text{ (I),}$$

wherein MFR(final) is the melt flow rate MFR (230 °C) determined according to ISO 1133 after visbreaking and MFR(initial) is the melt flow rate MFR (230 °C) determined according to ISO 1133 before visbreaking.

According to a further embodiment of the present invention, wherein the first propylene polymer (PP1) has a melt flow rate MFR (230 °C) determined according to ISO 1133 after visbreaking of at least 400 g/10 min.

According to another embodiment of the present invention, the second propylene polymer (PP2) has a melt flow rate MFR (230 °C) determined according to ISO 1133 after visbreaking of at least 21 g/10 min.

It is especially preferred that the first propylene polymer (PP1) has a xylene soluble content (XCS) below 3.1 wt.-%.

According to another embodiment of the present invention, the first propylene polymer (PP1) has a final molecular weight distribution Mw(final)/Mn(final) after visbreaking of at least 2.7, more preferably at least 3.0, like in the range of 3.0 to 5.0.

According to still another embodiment of the present invention, the second propylene polymer (PP2) has a final molecular weight distribution Mw(final)/Mn(final) after visbreaking of at least 3.0, more preferably at least 3.5, like in a range of 3.5 to 5.0.

According to one embodiment of the present invention, the second propylene polymer (PP2) has been polymerized in the presence of

a) a Ziegler-Natta catalyst (ZN-C2) comprising compounds (TC) of a transition metal of Group 4 to 6 of IUPAC, a Group 2 metal compound (MC) and an internal donor (ID), wherein said internal donor (ID) is a non-phthalic compound, preferably is a non-phthalic acid ester;
b) optionally a co-catalyst (Co), and
c) optionally an external donor (ED).

Additionally to the previous paragraph, it is especially preferred that

a) the internal donor (ID) is selected from optionally substituted malonates, maleates, succinates, glutarates, cyclohexene-1,2-dicarboxylates, benzoates and derivatives and/or mixtures thereof, preferably the internal donor (ID) is a citraconate;
b) the molar-ratio of co-catalyst (Co) to external donor (ED) [Co/ED] is 5 to 45.

According to one embodiment of the present invention, the nonwoven fabric is obtained by

a) producing the first spunbonded layer (S 1) by depositing spunbonded fibers (SBF) through a spinneret,
b) optionally producing at least one further spunbonded layer (S) by depositing spunbonded fibers (SBF) on the first spunbonded layer (S1) obtained in step a) through at least one further spinneret, thereby obtaining a multilayered structure comprising two or more, like two or three spunbonded layers (S) in sequence,
c) producing the first melt blown layer (M1) by depositing melt blown fibers (MBF) on the first spunbonded layer (S1) obtained in step a) or on the outermost spunbonded layer (S) obtained in step b) through an extruder, thereby obtaining a multilayered structure comprising one or more, like one, two or three spunbonded layer(s) (S) and a melt blown layer (M) in sequence,
d) optionally producing at least one further melt blown layer (M) by depositing melt blown fibers (MBF) on the first melt blown layer (M1) obtained in step c) through at least one further extruder, thereby obtaining a multilayered structure comprising one or more, like one, two or three spunbonded layer(s) (S) and two or more, like two or three melt blown layer(s) (M) in sequence,
e) producing the second spunbonded layer (S2) by depositing spunbonded fibers (SBF) through a spinneret on the first melt blown layer (M1) obtained in step c) or on the outermost melt blown layer (M) obtained in step d), thereby obtaining a multilayered structure comprising one or more, like one, two or three spunbonded layer(s) (S), one or more, like one, two or three melt blown layer(s) (M), and one spunbonded layer (S) in sequence, and
f) optionally producing at least one further spunbonded layer (S) by depositing spunbonded fibers (SBF) on the second spunbonded layer (S2) obtained in step e) through at least one further spinneret, thereby obtaining a multilayered structure comprising one or more, like one, two or three spunbonded layer(s) (S), one or more, like one, two or three melt blown layer(s) (M), and two or more, like one, two or three spunbonded layer(s) (S) in sequence.

The present invention is further directed to an article, comprising the nonwoven fabric (NF) as described above.

It is especially preferred that the article is selected from filtration medium (filter), diaper, sanitary napkin, panty liner, incontinence product for adults, protective clothing, surgical drape, surgical gown, and surgical wear.

In the following, the present invention is described in more detail.

**The nonwoven fabric (NF)**

The nonwoven fabric (NF) according to the present invention comprise at least one melt blown layer (M) and at least one spunbonded layer (S).

Preferably, the nonwoven fabric (NF) is a multi-layer construction like an SMS-web comprising, a spunbonded layer (S), a melt blown layer (M) and another spunbonded layer (S).

According to the present invention, the terms "SMS-web" or "SMS structure" are interchangeable and stand for a multilayer structure comprising at least one melt blown layer (M) and at least one spunbonded layer (S) obtained by depositing each layer on the subsequent layer.

Alternatively, the multi-layer construction can also include a multiplicity of melt blown web layers (M) and spunbonded web layers (S), such as a SSMMS structure.

It is especially preferred that the nonwoven fabric (NF) is a SMMS construction, i.e. consists of two melt blown layers (M) enclosed by two spunbonded layers (S).

As outlined above, the nonwoven fabric (NF) according to the instant invention is featured by high barrier properties. Accordingly, it is preferred that the hydrohead of the nonwoven fabric (NF) is at least 18 mbar, more preferably at least 19 mbar, still more preferably 20 mbar.

The weight per unit area of the melt-blown web (MBW) depends very much on the end use, however it is preferred that the melt-blown web has a weight per unit area in the range of 0.5 to 40.0 g/m$^2$, more preferably in the range from 0.6 to 10.0 g/m$^2$, like in the range from 0.8 to 8.0 g/m$^2$.

The nonwoven fabric (NF) is obtained in a sequential process comprising the steps

a) producing the first spunbonded layer (S1) by depositing spunbonded fibers (SBF) through a spinneret,

b) optionally producing at least one further spunbonded layer (S) by depositing spunbonded fibers (SBF) on the first spunbonded layer (S1) obtained in step a) through at least one further spinneret, thereby obtaining a multilayered structure comprising two or more, like two or three spunbonded layers (S) in sequence,

c) producing the first melt blown layer (M1) by depositing melt blown fibers (MBF) on the first spunbonded layer (S1) obtained in step a) or on the outermost spunbonded layer (S) obtained in step b) through an extruder, thereby obtaining a multilayered structure comprising one or more, like one, two or three spunbonded layer(s) (S) and a melt blown layer (M) in sequence,

d) optionally producing at least one further melt blown layer (M) by depositing melt blown fibers (MBF) on the first melt blown layer (M1) obtained in step c) through at least one further extruder, thereby obtaining a multilayered structure comprising one or more, like one, two or three spunbonded layer(s) (S) and two or more, like two or three melt blown layer(s) (M) in sequence,

e) producing the second spunbonded layer (S2) by depositing spunbonded fibers (SBF) through a spinneret on the first melt blown layer (M1) obtained in step c) or on the outermost melt blown layer (M) obtained in step d), thereby obtaining a multilayered structure comprising one or more, like one, two or three spunbonded layer(s) (S), one or more, like one, two or three melt blown layer(s) (M), and one spunbonded layer (S) in sequence, and

f) optionally producing at least one further spunbonded layer (S) by depositing spunbonded fibers (SBF) on the second spunbonded layer (S2) obtained in step e) through at least one further spinneret, thereby obtaining a multilayered structure comprising one or more, like one, two or three spunbonded layer(s) (S), one or more, like one, two or three melt blown layer(s) (M), and two or more, like one, two or three spunbonded layer(s) (S) in sequence.

As outlined above, it is preferred that the nonwoven fabric (NF) consists of two melt blown layers (M) enclosed by two spunbonded layers (S).

Thus, it is especially preferred that the nonwoven fabric (NF) is obtained in a sequential process comprising the steps

a) producing a first spunbonded layer (S1) by depositing spunbonded fibers (SBF) through a spinneret,

b) producing a first melt blown layer (M1) by depositing melt blown fibers (MBF) on the first spunbonded layer (S1) obtained in step a) through an extruder, thereby obtaining a multilayered structure comprising one spunbonded layer(s) (S) and one melt blown layer (M) in sequence,

c) producing a second melt blown layer (M2) by depositing melt blown fibers (MBF) on the first melt blown layer (M1) obtained in step b) through a further extruder, thereby obtaining a multilayered structure comprising one spunbonded layer (S) and two melt blown layers (M) in sequence, and

d) producing a second spunbonded layer (S2) by depositing spunbonded fibers (SBF) through a spinneret on the second melt blown layer (M2) obtained in step c), thereby obtaining a multilayered structure comprising one spunbonded layer (S), two melt blown layers (M) and one spunbonded layer (S) in sequence.

In the following, the melt blown layer (M) and the spunbonded layer (S) are described in more detail.

**The melt blown layer (M)**

As outlined above, the nonwoven fabric (NF) according to the present invention comprises at least one melt blown layer (M), said melt blown layer (M) comprising melt blown fibers (MBF).

Preferably, the melt blown fibers (MBF) make up at least 80 wt.-% of the melt blown layer(s) (M), more preferably at least 90 wt.-%, still more preferably at least 95 wt.-%. It is especially preferred that the melt blown layer(s) (M) consist of the melt blown fibers (MBF).

The melt blown fibers (MBF) are obtained from a first propylene polymer (PP1).

The first propylene polymer (PP1) can be a propylene copolymer or a propylene homopolymer, the latter being preferred.

In case the first propylene polymer (PP1) is a propylene copolymer, the first propylene polymer (PP1) comprises monomers copolymerizable with propylene, for example comonomers such as ethylene and/or $C_4$ to $C_8$ $\alpha$-olefins, in particular ethylene and/or $C_4$ to $C_6$ $\alpha$-olefins, e.g. 1-butene and/or 1-hexene. Preferably the first propylene polymer (PP1) according to this invention comprises, especially consists of, monomers copolymerizable with propylene from the group consisting of ethylene, 1-butene and 1-hexene. More specifically the first propylene polymer (PP1) of this invention comprises - apart from propylene - units derivable from ethylene and/or 1-butene. In a preferred embodiment the first propylene polymer (PP1) comprises units derivable from ethylene and propylene only.

The comonomer content of the first propylene polymer (PP1) is in the range of 0.0 to 5.0 mol-%, yet more preferably in the range of 0.0 to 3.0 mol-%, still more preferably in the range of 0.0 to 1.0 mol-%.

It is especially preferred that the first propylene polymer (PP1) is a first propylene homopolymer (H-PP1).

According to the present invention the expression "propylene homopolymer" relates to a polypropylene that consists substantially, i.e. of at least 99.0 wt.-%, more preferably of at least 99.5 wt.-%, still more preferably of at least 99.8 wt.-%, like of at least 99.9 wt.-%, of propylene units. In another embodiment only propylene units are detectable, i.e. only propylene has been polymerized.

One requirement of the first propylene polymer (PP1), like the first propylene homopolymer (H-PP1) is its rather high melt flow rate, which differ(s) from other polymers used for instance in the melt blown technique to produce fibers. Accordingly, it is required that in the present invention the propylene homopolymer has a melt flow rate $MFR_2$ (final) (230 °C/2.16 kg) measured according to ISO 1133 of at least 400 g/10 min. In one embodiment of the present invention, the propylene homopolymer has a melt flow rate $MFR_2$ (final) (230 °C/2.16 kg) measured according to ISO 1133 in the range from 400 to 2,400 g/10 min, more preferably in the range from 600 to 2,200 g/10 min, still more preferably in the range from 700 to 2,000 g/10 min and most preferably in the range from 780 to 1,500 g/10 min.

Unless otherwise indicated, throughout the instant invention the melt flow rate (230°C/2.16 kg) of the first propylene polymer (PP1), like the first propylene homopolymer (H-PP1), is preferably the melt flow rate (230°C/2.16 kg) after visbreaking.

Thus, it is preferred that the first propylene polymer (PP1), like the first propylene homopolymer (H-PP1), has been visbroken.

Accordingly, the melt flow rate $MFR_2$ (initial) (230°C/2.16 kg), i.e. the melt flow rate before visbreaking, of the first propylene polymer (PP1), like the first propylene homopolymer (H-PP1), is much lower, like from 15 to 150 g/10 min. For example, the melt flow rate $MFR_2$ (initial) (230°C/2.16 kg) of the first propylene polymer (PP1), like the first propylene homopolymer (H-PP1), before visbreaking is from 30 to 120 g/10min, like from 50 to 100 g/10min.

In one embodiment of the present invention, the first propylene polymer (PP1), like the first propylene homopolymer (H-PP1), has been visbroken with a visbreaking ratio [final $MFR_2$ (230°C/2.16 kg) / initial $MFR_2$ (230°C/2.16 kg)] at least 5, wherein "final $MFR_2$ (230°C/2.16 kg)" is the $MFR_2$ (230°C/2.16 kg) of the first propylene polymer (PP1), like the first propylene homopolymer (H-PP1), after visbreaking and "initial $MFR_2$ (230°C/2.16 kg)" is the $MFR_2$ (230°C/2.16 kg) of the first propylene polymer (PP1), like the first propylene homopolymer (H-PP1), before visbreaking. Preferably, the first propylene polymer (PP1), like the first propylene homopolymer (H-PP1), has been visbroken with a visbreaking ratio [final $MFR_2$ (230°C/2.16 kg) / initial $MFR_2$ (230°C/2.16 kg)] of 5 to 25, wherein "final $MFR_2$ (230°C/2.16 kg)" is the $MFR_2$ (230°C/2.16 kg) of the propylene homopolymer after visbreaking and "initial $MFR_2$ (230°C/2.16 kg)" is the $MFR_2$ (230°C/2.16 kg) of the propylene homopolymer before visbreaking. More preferably, the first propylene polymer (PP1), like the first propylene homopolymer (H-PP1), has been visbroken with a visbreaking ratio [final $MFR_2$ (230°C/2.16 kg) / initial $MFR_2$ (230°C/2.16 kg)] of 5 to 15, wherein "final $MFR_2$ (230°C/2.16 kg)" is the $MFR_2$ (230°C/2.16 kg) of the first propylene polymer (PP1), like the first propylene homopolymer (H-PP1), after visbreaking and "initial $MFR_2$ (230°C/2.16 kg)" is the $MFR_2$ (230°C/2.16 kg) of the first propylene polymer (PP1), like the first propylene homopolymer (H-PP1), before visbreaking.

As mentioned above, one characteristic of first propylene polymer (PP1), like the first propylene homopolymer (H-PP1), is that the first propylene polymer (PP1), like the first propylene homopolymer (H-PP1), has been visbroken. Preferred mixing devices suited for visbreaking are discontinuous and continuous kneaders, twin screw extruders and single screw extruders with special mixing sections and co-kneaders.

By visbreaking the first propylene polymer (PP1), like the first propylene homopolymer (H-PP1), with heat or at more controlled conditions with peroxides, the molar mass distribution (MWD) becomes narrower because the long molecular chains are more easily broken up or scissored and the molar mass M, will decrease, corresponding to an $MFR_2$ increase. The $MFR_2$ increases with increase in the amount of peroxide which is used.

Such visbreaking may be carried out in any known manner, like by using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxy-isopropyl)benzene (DIPP) (for instance sold under the tradenames Perkadox 14S and Luperox DC). Suitable amounts of peroxide to be employed in accordance with the present invention are in principle known to the skilled person and can easily be calculated on the basis of the amount of first propylene polymer (PP1), like the first propylene homopolymer (H-PP1), to be subjected to visbreaking, the $MFR_2$ (230 °C/2.16 kg) value of the first propylene polymer (PP1), like the first propylene homopolymer (H-PP1), to be subjected to visbreaking and the desired target $MFR_2$ (230 °C/2.16 kg) of the product to be obtained. Accordingly, typical amounts of peroxide visbreaking agent are from 0.005 to 0.7 wt.-%, more preferably from 0.01 to 0.4 wt.-%, based on the total amount of first propylene polymer (PP1), like the first propylene homopolymer (H-PP1), employed.

Typically, visbreaking in accordance with the present invention is carried out in an extruder, so that under the suitable conditions, an increase of melt flow rate is obtained. During visbreaking, higher molar mass chains of the starting product are broken statistically more frequently than lower molar mass molecules, resulting as indicated above in an overall decrease of the average molecular weight and an increase in melt flow rate.

The first propylene polymer (PP1), like the first propylene homopolymer (H-PP1), is preferably obtained by visbreaking the first propylene polymer (PP1), like the first propylene homopolymer (H-PP1), preferably visbreaking by the use of peroxide.

More precisely, the first propylene polymer (PP1), like the first propylene homopolymer (H-PP1), may be obtained by visbreaking the first propylene polymer (PP1), like the first propylene homopolymer (H-PP1), preferably by the use of peroxide as mentioned above, in an extruder.

Preferably the first propylene polymer (PP1), like the first propylene homopolymer (H-PP1), is isotactic. Accordingly, it is preferred that the first propylene polymer (PP1), like the first propylene homopolymer (H-PP1), has a rather high pentad concentration (mmmm%) i.e. more than 94.1 %, more preferably more than 94.4 %, like more than 94.4 to 98.5 %, still more preferably at least 94.7 %, like in the range of 94.7 to 97.5 %.

A further characteristic of the first propylene polymer (PP1), like the first propylene homopolymer (H-PP1), is the low amount of misinsertions of propylene within the polymer chain, which indicates that the first propylene polymer (PP1), like the first propylene homopolymer (H-PP1), is produced in the presence of a Ziegler-Natta catalyst, preferably in the presence of a Ziegler-Natta catalyst (ZN-C1) as defined in more detail below. Accordingly, the first propylene polymer (PP1), like the first propylene homopolymer (H-PP1), is preferably featured by low amount of 2,1 erythro regio-defects, i.e. of equal or below 0.4 mol.-%, more preferably of equal or below than 0.2 mol.-%, like of not more than 0.1 mol.-%, determined by $^{13}$C-NMR spectroscopy. In an especially preferred embodiment no 2,1 erythro regio-defects are detectable.

It is preferred that the first propylene polymer (PP1), like the first propylene homopolymer (H-PP1), is featured by rather low cold xylene soluble (XCS) content, i.e. by a xylene cold soluble (XCS) below 3.1 wt.-% Accordingly, the first propylene polymer (PP1), like the first propylene homopolymer (H-PP1), has preferably a xylene cold soluble content (XCS) in the range of 1.0 to 3.0 wt.-%, more preferably in the range of 2.0 to 2.8 wt.-%, still more preferably in the range of 2.2 to 2.6 wt.-%.

The amount of xylene cold solubles (XCS) additionally indicates that the first propylene polymer (PP1), like the first propylene homopolymer (H-PP1), is preferably free of any elastomeric polymer component, like an ethylene propylene rubber. In other words, the first propylene polymer (PP1), like the first propylene homopolymer (H-PP1), shall be not a heterophasic polypropylene, i.e. a system consisting of a polypropylene matrix in which an elastomeric phase is dispersed. Such systems are featured by a rather high xylene cold soluble content.

The amount of xylene cold solubles (XCS) additionally indicates that the first propylene polymer (PP1), like the first propylene homopolymer (H-PP1), preferably does not contain elastomeric (co)polymers forming inclusions as a second phase for improving mechanical properties. A polymer containing elastomeric (co)polymers as insertions of a second phase would by contrast be called heterophasic and is preferably not part of the present invention. The presence of second phases or the so called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

Accordingly, it is preferred that the first propylene polymer (PP1), like the first propylene homopolymer (H-PP1), according to this invention has no glass transition temperature below -30 °C, preferably below -25 °C, more preferably below -20 °C.

On the other hand, in one preferred embodiment the first propylene polymer (PP1), like the first propylene homopolymer (H-PP1), according to this invention has a glass transition temperature in the range of -12 to 5 °C, more preferably in the range of -10 to 2 °C.

Further, the first propylene polymer (PP1), like the first propylene homopolymer (H-PP1), is featured by a rather high weight molecular weight. Accordingly, it is preferred that the first propylene polymer (PP1), like the first propylene homopolymer (H-PP1), has a weight molecular weight Mw (initial) before visbreaking above 100,000 kg/mol, more preferably in the range of 100,000 to 200,000 kg/mol, still more preferably in the range of 110,000 kg/mol to 150,000 kg/mol.

Additionally or alternatively to the previous paragraph, it is preferred that the first propylene polymer (PP1), like the first propylene homopolymer (H-PP1), has an initial molecular weight distribution (Mw(initial)/Mn(initial)) before visbreaking above 4.0, more preferably in the range of 4.0 to 10.0, still more preferably in the range of 5.0 to 8.0.

As outlined above, it is preferred that the first propylene polymer (PP1), like the first propylene homopolymer (H-PP1) has been visbroken.

Accordingly, it is preferred that the first propylene polymer (PP1), like the first propylene homopolymer (H-PP1), has a final molecular weight distribution (Mw(final)/Mn(final)) after visbreaking of at least 2.7, more preferably at least 3.0, like in the range of 3.0 to 5.0.

Further, the first propylene polymer (PP1), like the first propylene homopolymer (H-PP1), is preferably a crystalline propylene homopolymer. The term "crystalline" indicates that the first propylene polymer (PP1), like the first propylene homopolymer (H-PP1), has a rather high melting temperature. Accordingly throughout the invention the first propylene polymer (PP1), like the first propylene homopolymer (H-PP1), is regarded as crystalline unless otherwise indicated. Therefore, the first propylene polymer (PP1), like the first propylene homopolymer (H-PP1), preferably has a melting temperature Tm measured by differential scanning calorimetry (DSC) of at least 160 °C, more preferably at least 161 °C, still more preferably at least 163 °C, like in the range of 163 °C to 167 °C.

Further it is preferred that the first propylene polymer (PP1), like the first propylene homopolymer (H-PP1), has a crystallization temperature Tc measured by differential scanning calorimetry (DSC) of equal or more than 110 °C, more preferably in the range of 110 to 128 °C, more preferably in the range of 114 to 120 °C.

The first propylene polymer (PP1), like the first propylene homopolymer (H-PP1), is preferably featured by high stiffness. Accordingly the first propylene polymer (PP1), like the first propylene homopolymer (H-PP1), preferably has a rather high tensile modulus. Accordingly it is preferred that the first propylene polymer (PP1), like the first propylene homopolymer (H-PP1), has a tensile modulus measured at 23 °C according to ISO 527-1 (cross head speed 1 mm/min) of at least 1,200 MPa, more preferably in the range of 1,200 to 2,000 MPa, still more preferably in the range of 1,300 to 1,800 MPa.

Preferably, the first propylene polymer (PP1), like the first propylene homopolymer (H-PP1), is obtained by polymerizing propylene in the presence of a Ziegler-Natta catalyst as defined below. More preferably, the first propylene polymer (PP1), like the first propylene homopolymer (H-PP1), according to this invention is obtained by a process as defined in detail below by using the Ziegler-Natta catalyst.

The first propylene polymer (PP1), like the first propylene homopolymer (H-PP1), can comprise, more preferably can consist of, two fractions, namely a first propylene homopolymer fraction (H-PP1a) and a second propylene homopolymer fraction (H-PP1b). Preferably the weight ratio between the first propylene homopolymer fraction (H-PP1a) and the second propylene homopolymer fraction (H-PP1b) [(H-PP1a):(H-PP1b)] is 70:30 to 40:60, more preferably 65:35 to 45:55.

The first propylene homopolymer fraction (H-PP1a) and the second propylene homopolymer fraction (H-PP1b) may differ in the melt flow rate. However, it is preferred that the melt flow rate MFR$_2$ (230 °C) of the first propylene homopolymer fraction (H-PP1a) and of the second propylene homopolymer fraction (H-PP1b) are nearly identical, i.e. differ not more than 15% as calculated from the lower of the two values, preferably differ not more than 10%, like differ not more than 7%.

The first propylene polymer (PP1), like the first propylene homopolymer (H-PP1), of the present invention may comprise further components. However, it is preferred that the inventive first propylene polymer (PP1), like the first propylene homopolymer (H-PP1), comprises as polymer components only the first propylene polymer (PP1), like the first propylene homopolymer (H-PP1), as defined in the instant invention. Accordingly, the amount of first propylene polymer (PP1), like the first propylene homopolymer (H-PP1), may not result in 100.0 wt.-% based on the total first propylene polymer (PP1), like the first propylene homopolymer (H-PP1). Thus, the remaining part up to 100.0 wt.-% may be accomplished by further additives known in the art. However, this remaining part shall be not more than 5.0 wt.-%, like not more than 3.0 wt.-% within the total first propylene polymer (PP1), like the first propylene homopolymer (H-PP1). For instance, the inventive first propylene polymer (PP1), like the first propylene homopolymer (H-PP1), may comprise additionally small amounts of additives selected from the group consisting of antioxidants, stabilizers, fillers, colorants, nucleating agents and antistatic agents. In general, they are incorporated during granulation of the pulverulent product obtained in the polymerization. Accordingly, the first propylene polymer (PP1), like the first propylene homopolymer (H-PP1), constitutes at least to 95.0 wt.-%, more preferably at least 97.0 wt.-% to the total first propylene polymer (PP1), like the first propylene homopolymer (H-PP1).

In case the first propylene polymer (PP1), like the first propylene homopolymer (H-PP1), comprises a α-nucleating agent, it is preferred that it is free of β-nucleating agents. The α-nucleating agent is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer (as discussed in more detail below), and
(v) mixtures thereof.

Such additives are generally commercially available and are described, for example, in "Plastic Additives Handbook", pages 871 to 873, 5th edition, 2001 of Hans Zweifel.

Preferably the first propylene polymer (PP1), like the first propylene homopolymer (H-PP1), contains up to 5.0 wt.-% of the α-nucleating agent. In a preferred embodiment, the propylene homopolymer contains not more than 500 ppm, more preferably of 0.025 to 200 ppm, more preferably of 0.1 to 200 ppm, still more preferably 0.3 to 200 ppm, most preferably 0.3 to 100 ppm of a α-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, sodium 2,2'-methylenebis (4, 6,-di-tert-butylphenyl) phosphate, vinylcycloalkane polymer, vinylalkane polymer, and mixtures thereof.

As outlined above, the melt blown layer (M) according to the present invention comprises melt blown fibers (MBF) obtained from the first propylene polymer (PP1). The melt blown fibers (MBF) preferably comprise at least 95 wt.-%, based on the total weight of the melt blown fibers, of the first propylene polymer (PP1), like the first propylene homopolymer (H-PP1), as described above. It is especially preferred that the melt blown fibers (MBF) consist of the first propylene polymer (PP1), like the first propylene homopolymer (H-PP1).

More preferably, the melt blown layer (M) according to the present invention comprises a melt blown web (MBW) made of the melt blown fibers (MBF) as described above. It is preferred that the melt blown web (MBW) has a weight per unit area of at least 0.8 $g/m^2$, more preferably of at least 1 $g/m^2$, yet more preferably in the range of 1 to 30 $g/m^2$, still more preferably in the range of 1.3 to 20 $g/m^2$.

The first propylene polymer (PP1), like the first propylene homopolymer (H-PP1), according to this invention is preferably produced in the presence of

(a) a Ziegler-Natta catalyst (ZN-C1) comprising compounds (TC) of a transition metal of Group 4 to 6 of IUPAC, a Group 2 metal compound (MC) and an internal donor (ID);
(b) optionally a co-catalyst (Co), and
(c) optionally an external donor (ED).

Preferably, the first propylene polymer (PP1), like the first propylene homopolymer (H-PP1), is produced in a sequential polymerization process as further described below comprising at least two reactors (R1) and (R2), in the first reactor (R1) the first propylene homopolymer fraction (H-PP1a) is produced and subsequently transferred into the second reactor (R2), in the second reactor (R2) the second propylene homopolymer fraction (H-PP1b) is produced in the presence of the first propylene homopolymer fraction (H-PP1a).

The process for the preparation of the propylene homopolymer as well as the Ziegler-Natta catalyst (ZN-C1) are further described in detail below.

As already indicated above, the first propylene polymer (PP1), like the first propylene homopolymer (H-PP1), is preferably produced in a sequential polymerization process.

The term "sequential polymerization system" indicates that the first propylene polymer (PP1), like the first propylene homopolymer (H-PP1), is produced in at least two reactors connected in series. Accordingly, the present polymerization system comprises at least a first polymerization reactor (R1) and a second polymerization reactor (R2), and optionally a third polymerization reactor (R3). The term "polymerization reactor" shall indicate that the main polymerization takes place. Thus, in case the process consists of two polymerization reactors, this definition does not exclude the option that the overall system comprises for instance a pre-polymerization step in a pre-polymerization reactor. The term "consist of" is only a closing formulation in view of the main polymerization reactors.

Preferably, at least one of the two polymerization reactors (R1) and (R2) is a gas phase reactor (GPR). Still more preferably the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR). Accordingly, the average concentration of the first fraction (1st F) of the first propylene polymer (PP1), like the first propylene homopolymer (H-PP1), i.e. the first propylene homopolymer fraction (H-PP1a), in the polymer slurry within the loop reactor (LR) is typically from 15 wt.-% to 55 wt.-%, based on the total weight of the polymer slurry within the loop reactor (LR). In one preferred embodiment of the present invention the average concentration of the first propylene homopolymer fraction (H-PP1a) in the polymer slurry within the loop reactor (LR) is from 20 wt.-% to 55 wt.-% and more preferably from 25 wt.-% to 52 wt.-%, based on the total weight of the polymer slurry within the loop reactor (LR).

Preferably the propylene homopolymer of the first polymerization reactor (R1), i.e. the first propylene homopolymer fraction (H-PP1a), more preferably the polymer slurry of the loop reactor (LR) containing the first propylene homopolymer fraction (H-PP1a), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the first propylene homopolymer fraction (H-PP1a), is led directly to the next stage gas phase reactor.

Alternatively, the propylene homopolymer of the first polymerization reactor (R1), i.e. the first propylene homopolymer fraction (H-PP 1 a), more preferably polymer slurry of the loop reactor (LR) containing the first propylene homopolymer fraction (H-PP1a), may be also directed into a flash step or through a further concentration step before fed into the second polymerization reactor (R2), i.e. into the gas phase reactor (GPR). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2), and any subsequent reactor, for instance the third polymerization reactor (R3), are preferably gas phase reactors (GPRs). Such gas phase reactors (GPR) can be any mechanically mixed or fluid bed reactors. Preferably the gas phase reactors (GPRs) comprise a mechanically agitated fluid bed reactor with gas velocities of at least 0.2 m/sec. Thus it is appreciated that the gas phase reactor is a fluidized bed type reactor preferably with a mechanical stirrer.

Thus, in a preferred embodiment the first polymerization reactor (R1) is a slurry reactor (SR), like loop reactor (LR), whereas the second polymerization reactor (R2) and any optional subsequent reactor, like the third polymerization reactor (R3), are gas phase reactors (GPRs). Accordingly for the instant process at least two, preferably two polymerization reactors (R1) and (R2) or three polymerization reactors (R1), (R2) and (R3), namely a slurry reactor (SR), like loop reactor (LR) and a (first) gas phase reactor (GPR1) and optionally a second gas phase reactor (GPR2), connected in series are used. If needed prior to the slurry reactor (SR) a pre-polymerization reactor is placed.

The Ziegler-Natta catalyst (ZN-C1) is fed into the first polymerization reactor (R1) and is transferred with the polymer (slurry) obtained in the first polymerization reactor (R1) into the subsequent reactors. If the process covers also a pre-polymerization step it is preferred that all of the Ziegler-Natta catalyst (ZN-C1) is fed in the pre-polymerization reactor. Subsequently the pre-polymerization product containing the Ziegler-Natta catalyst (ZN-C1) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Especially good results are achieved in case the temperature in the reactors is carefully chosen.

Accordingly it is preferred that the operating temperature in the first polymerization reactor (R1) is in the range of 62 to 85 °C, more preferably in the range of 65 to 82 °C, still more preferably in the range of 67 to 80 °C.

Alternatively or additionally to the previous paragraph it is preferred that the operating temperature in the second polymerization reactor (R2) and optional in the third reactor (R3) is in the range of 62 to 95 °C, more preferably in the range of 67 to 92 °C.

Preferably the operating temperature in the second polymerization reactor (R2) is equal to or higher than the operating temperature in the first polymerization reactor (R1). Accordingly it is preferred that the operating temperature

(a) in the first polymerization reactor (R1) is in the range of 62 to 85 °C, more preferably in the range of 65 to 82 °C, still more preferably in the range of 67 to 80 °C, like 70 to 80 °C;
and
(b) in the second polymerization reactor (R2) is in the range of 75 to 95 °C, more preferably in the range of 78 to 92 °C, still more preferably in the range of 78 to 88 °C, with the proviso that the operating temperature in the in the second polymerization reactor (R2) is equal or higher to the operating temperature in the first polymerization reactor (R1).

Typically the pressure in the first polymerization reactor (R1), preferably in the loop reactor (LR), is in the range from 20 to 80 bar, preferably 30 to 70 bar, like 35 to 65 bar, whereas the pressure in the second polymerization reactor (R2), i.e. in the (first) gas phase reactor (GPR1), and optionally in any subsequent reactor, like in the third polymerization reactor (R3), e.g. in the second gas phase reactor (GPR2), is in the range from 5 to 50 bar, preferably 15 to 40 bar.

Preferably hydrogen is added in each polymerization reactor in order to control the molecular weight, i.e. the melt flow rate $MFR_2$.

Preferably the average residence time is rather long in the polymerization reactors (R1) and (R2). In general, the average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

Accordingly the average residence time ($\tau$) in the first polymerization reactor (R1) is preferably at least 15 min, more preferably in the range of 15 to 80 min, still more preferably in the range of 20 to 60 min, like in the range of 24 to 50 min, and/or the average residence time ($\tau$) in the second polymerization reactor (R2) is preferably at least 70 min, more preferably in the range of 70 to 220 min, still more preferably in the range of 80 to 210 min, yet more preferably in the range of 90 to 200 min, like in the range of 90 to 190 min. Preferably the average residence time ($\tau$) in the third polymerization reactor (R3) - if present - is preferably at least 30 min, more preferably in the range of 30 to 120 min, still more preferably in the range of 40 to 100 min, like in the range of 50 to 90 min.

As mentioned above the preparation of the propylene homopolymer can comprise in addition to the (main) polymerization of the propylene homopolymer in the at least two polymerization reactors (R1, R3 and optional R3) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the Ziegler-Natta catalyst (ZN-C1). According to this embodiment the Ziegler-Natta catalyst (ZN-C1), the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst (ZN-C1), the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the Ziegler-Natta catalyst (ZN-C1) and the polypropylene (Pre-PP) produced in the pre-polymerization reactor (PR) is obtained. Preferably the Ziegler-Natta catalyst (ZN-C1) is (finely) dispersed in the polypropylene (Pre-PP). In other words, the Ziegler-Natta catalyst (ZN-C1) particles introduced in the pre-polymerization reactor (PR) split into smaller fragments which are evenly distributed within the growing polypropylene (Pre-PP). The sizes of the introduced Ziegler-Natta catalyst (ZN-C1) particles as well as of the obtained fragments are not of essential relevance for the instant invention and within the skilled knowledge.

As mentioned above, if a pre-polymerization is used, subsequent to said pre-polymerization, the mixture (MI) of the Ziegler-Natta catalyst (ZN-C1) and the polypropylene (Pre-PP) produced in the pre-polymerization reactor (PR) is transferred to the first reactor (R1). Typically the total amount of the polypropylene (Pre-PP) in the final propylene copolymer (R-PP) is rather low and typically not more than 5.0 wt.-%, more preferably not more than 4.0 wt.-%, still more preferably in the range of 0.5 to 4.0 wt.-%, like in the range 1.0 of to 3.0 wt.-%.

In case that pre-polymerization is not used, propylene and the other ingredients such as the Ziegler-Natta catalyst (ZN-C1) are directly introduced into the first polymerization reactor (R1).

Accordingly, the propylene homopolymer is preferably produced in a process comprising the following steps under the conditions set out above

(a) in the first polymerization reactor (R1), i.e. in a loop reactor (LR), propylene is polymerized obtaining a first propylene homopolymer fraction (H-PP1a) of the propylene homopolymer (H-PP1),

(b) transferring said first propylene homopolymer fraction (H-PP1a) to a second polymerization reactor (R2),

(c) in the second polymerization reactor (R2) propylene is polymerized in the presence of the first propylene homopolymer fraction (H-PP1 a) obtaining a second propylene homopolymer fraction (H-PP1b) of the propylene homopolymer, said first propylene homopolymer fraction (H-PP1a) and said second propylene homopolymer fraction (H-PP1b) form the propylene homopolymer.

A pre-polymerization as described above can be accomplished prior to step (a).

In the process described above a Ziegler-Natta catalyst (ZN-C1) for the preparation of the first propylene polymer (PP1) is applied. This Ziegler-Natta catalyst (ZN-C1) can be any stereospecific Ziegler-Natta catalyst (ZN-C1) for propylene polymerization, which preferably is capable of catalysing the polymerization and copolymerization of propylene and optional comonomers at a pressure of 500 to 10000 kPa, in particular 2500 to 8000 kPa, and at a temperature of 40 to 110°C, in particular of 60 to 110°C.

Preferably, the Ziegler-Natta catalyst (ZN-C1) comprises a high-yield Ziegler-Natta type catalyst including an internal donor component, which can be used at high polymerization temperatures of 80°C or more. Such high-yield Ziegler-Natta catalyst (ZN-C1) can comprise a succinate, a diether, a phthalate etc., or mixtures therefrom as internal donor (ID) and are for example commercially available from LyondellBasell under the Avant ZN trade name. Examples of the Avant ZN series are Avant ZN 126 and Avant ZN 168. Avant ZN 126 is a Ziegler-Natta catalyst with 3.5 wt% titanium and a diether compound as internal electron donor, which is commercially available from LyondellBasell. Avant ZN 168 is a Ziegler-Natta catalyst with 2.6 wt % titanium and a succinate compound as internal electron donor, which is commercially available from LyondellBaselll. A further example of the Avant ZN series is the catalyst ZN180M of LyondellBasell.

Additional suitable catalysts are described for example in WO 2012/007430, EP2610271, EP261027 and EP2610272.

The Ziegler-Natta catalyst (ZN-C1) is preferably used in association with an alkyl aluminum cocatalyst and optionally external donors.

As further component in the instant polymerization process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to orless than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$_2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein R3 and R4 can be the same or different a represent a hydrocarbon group having 1 to 12 carbon atoms. R3 and R4 are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that R3 and R4 are independently selected from the group consisting of methyl, ethyl, n-propyl, n-butyl, octyl, decanyl, iso-propyl, iso-butyl, isopentyl, tert.-butyl, tert.-amyl, neopentyl, cyclopentyl, cyclohexyl, methylcyclopentyl and cycloheptyl.

More preferably both $R^3$ and $R^4$ are the same, yet more preferably both $R^3$ and $R^4$ are an ethyl group.

Especially preferred external donors (ED) are the dicyclopentyl dimethoxy silane donor (D donor) or the cyclohexylmethyl dimethoxy silane donor (C-Donor).

In addition to the Ziegler-Natta catalyst (ZN-C1) and the optional external donor (ED) a cocatalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Preferably the ratio between the co-catalyst (Co) and the external donor (ED) [Co/ED] and/or mthe ratio between the co-catalyst (Co) and the transition metal (TM) [Co/TM] should be carefully chosen.

Accordingly,

(a) the mol-ratio of co-catalyst (Co) to external donor (ED) [Co/ED] must be in the range of 5 to 45, preferably is in the range of 5 to 35, more preferably is in the range of 5 to 25;
and optionally
(b) the mol-ratio of co-catalyst (Co) to titanium compound (TC) [Co/TC] must be in the range of above 80 to 500, preferably is in the range of 100 to 350, still more preferably is in the range of 120 to 300.

As outlined above, the first propylene polymer (PP1) can be nucleated, preferably $\alpha$-nucleated. As nucleating agent, a polymeric nucleating agent, preferably a polymer of vinyl compound, more preferably a polymeric nucleating agent obtainable by polymerizing vinylcycloalkane monomers or vinylalkane monomers can be used.

The polymeric nucleating agent is more preferably a polymerized vinyl compound according to the following formula

$$CH_2=CH-CHR^{11}R^{12}$$

wherein $R^{11}$ and $R^{12}$ together form a 5- or 6-membered saturated, unsaturated or aromatic ring, optionally containing substituents, or independently represent an alkyl group comprising 1 to 4 carbon atoms, whereby in case $R^{11}$ and $R^{12}$ form an aromatic ring, the hydrogen atom of the $-CHR^{11}R^{12}$ moiety is not present.

Even more preferably, the polymeric nucleating agent is selected from: vinyl cycloalkane polymer, preferably vinyl cyclohexane (VCH) polymer, vinyl cyclopentane polymer, 3-methyl-1-butene polymer and vinyl-2-methyl cyclohexane polymer.

The most preferred nucleating agent is vinyl cyclohexane (VCH) polymer.

As mentioned above, in a preferred embodiment, nucleating agent is a polymeric nucleating agent, more preferably a polymer of vinyl compound according to the formula as defined above, even more preferably vinyl cyclohexane (VCH) polymer.

The amount of nucleating agent preferably is not more than 10000 ppm by weight (means parts per million based on the total weight of the polypropylene composition (100 wt.-%), also abbreviated herein shortly as ppm), more preferably not more than 6000 ppm, even more preferably not more than 5000 ppm, based on the total weight of the first propylene polymer (PP1) (100 wt.-%).

The amount of the nucleating agent still more preferably is not more than 500 ppm, preferably is from 0.025 to 200 ppm, and more preferably is from 0.1 to 200 ppm, more preferably is from 0.3 to 200 ppm, most preferably is from 0.3 to 100 ppm, based on the total weight of the first propylene polymer (PP1) (100 wt.-%).

In the preferred embodiment the nucleating agent is a polymeric nucleating agent, most preferably a polymer of vinyl compound according to formula (III) as defined above, even more preferably vinyl cyclohexane (VCH) polymer as defined above, and the amount of said nucleating agent (B) is not more than 200 ppm, more preferably is from 0.025 to 200 ppm, and more preferably is from 0.1 to 200 ppm, more preferably is from 0.3 to 200 ppm, most preferably is from 0.3 to 100 ppm, based on the total weight of the first propylene polymer (PP1) (100 wt.-%).

The nucleating agent may be introduced to the first propylene polymer (PP1) e.g. during the polymerization process of the first propylene polymer (PP1) or may be incorporated to the first propylene polymer (PP1) by mechanical blending with a nucleated polymer, containing the polymeric nucleating agent (so-called master batch technology) or by mechanical blending of the first propylene polymer (PP1) with the nucleating agent as such.

Thus, the nucleating agent can be introduced to the first propylene polymer (PP1) during the polymerization process of the first propylene polymer (PP1). The nucleating agent is preferably introduced to the first propylene polymer (PP1) by first polymerizing the above defined vinyl compound according to formula (II) as defined above, even more preferably vinyl cyclohexane (VCH), in the presence of a catalyst system as described above, comprising a solid Ziegler Natta catalyst component, a cocatalyst and optional external donor, and the obtained reaction mixture of the polymer of the vinyl compound according to formula (III) as defined above, even more preferably vinyl cyclohexane (VCH) polymer, and the catalyst system is then used for producing the first propylene polymer (PP1).

The polymerization of the vinyl compound, e. g. VCH, can be done in any inert fluid that does not dissolve the polymer formed (e. g. polyVCH). It is important to make sure that the viscosity of the final catalyst/polymerized vinyl compound/inert fluid mixture is sufficiently high to prevent the catalyst particles from settling during storage and transport.

The adjustment of the viscosity of the mixture can be done either before or after the polymerization of the vinyl compound. It is, e. g., possible to carry out the polymerization in a low viscosity oil and after the polymerization of the vinyl compound the viscosity can be adjusted by addition of a highly viscous substance. Such highly viscous substance can be a "wax", such as an oil or a mixture of an oil with a solid or highly viscous substance (oil-grease). The viscosity of such a viscous substance is usually 1,000 to 15,000 cP at room temperature. The advantage of using wax is that the catalyst storing and feeding into the process is improved. Since no washing, drying, sieving and transferring are needed, the catalyst activity is maintained. The weight ratio between the oil and the solid or highly viscous polymer is preferably less than 5: 1. In addition to viscous substances, liquid hydrocarbons, such as isobutane, propane, pentane and hexane, can also be used as a medium in the modification step.

The polypropylenes produced with a catalyst modified with polymerized vinyl compounds contain essentially no free (unreacted) vinyl compounds. This means that the vinyl compounds shall be completely reacted in the catalyst modification step.

Further, the reaction time of the catalyst modification by polymerization of a vinyl compound should be sufficient to allow for complete reaction of the vinyl monomer, i. e. the polymerization is continued until the amount of unreacted vinyl compounds in the reaction mixture (including the polymerization medium and the reactants) is less than 0.5 wt%, in particular less than 2000 ppm by weight (shown by analysis). Thus, when the prepolymerized catalyst contains a maximum of about 0.1 wt% vinyl compound, the final vinyl compound content in the polypropylene will be below the limit of determination using the GC-MS method (< 0.01 ppm by weight). Generally, when operating on an industrial scale, a polymerization time of at least 30 minutes is required, preferably the polymerization time is at least 1 hour and in particular at least 5 hours. Polymerization times even in the range of 6 to 50 hours can be used. The modification can be done at temperatures of 10 to 70°C, preferably 35 to 65°C.

This catalyst modification step is known as BNT-technology and is performed during the above described pre-polymerization step in order to introduce the polymeric nucleating agent.

General preparation of such modified catalyst system vinyl compound (II) is disclosed e.g. in EP 1 028 984 or WO 00/6831.

In another embodiment the polymeric nucleating agent is added with the so called masterbatch technology, where an already nucleated polymer, preferably a propylene homopolymer, containing the polymeric nucleating agent (masterbatch) is blended with the first propylene polymer (PP1). Such a masterbatch is preferably prepared by polymerizing propylene in a sequential polymerization process.

The term "sequential polymerization system" indicates that the first propylene polymer (PP1) is produced in at least two reactors connected in series. Accordingly, the present polymerization system comprises at least a first polymerization reactor (R1) and a second polymerization reactor (R2), and optionally a third polymerization reactor (R3). The term "polymerization reactor" shall indicate that the main polymerization takes place. Thus, in case the process consists of two polymerization reactors, this definition does not exclude the option that the overall system comprises for instance a pre-polymerization step in a prepolymerization reactor. The term "consist of" is only a closing formulation in view of the main polymerization reactors.

The produced propylene homopolymer, containing the polymeric nucleating agent, is the so called carrier polymer. If the nucleating agent is added in the form of a masterbatch together with a carrier polymer, the concentration of the nucleating agent in the masterbatch is at least 10 ppm, typically at least 15 ppm. Preferably this nucleating agent is present in the masterbatch in a range of from 10 to 2000 ppm, more preferably more than 15 to 1000 ppm, such as 20 to 500 ppm.

As described above, the carrier polymer is preferably a propylene homopolymer, produced with a catalyst system as described above for the first propylene polymer (PP1) and having an $MFR_2$ (230°C, 2.16 kg) in the range of 1.0 to 800 g/10 min, preferably 1.5 to 500 g/10 min, more preferably 2.0 to 200 g/10 min and most preferably 2.5 to 150 g/10 min.

More preferably, the carrier polymer is an isotactic propylene homopolymer having a melting point very similar to the above defined propylene homopolymer as the first propylene polymer (PP1). Therefore, the carrier polymer has a melting temperature Tm measured by differential scanning 25 calorimetry (DSC) of equal or more than 150°C, i.e. of equal or more than 150 to 168°C, more preferably of at least 155°C, i.e. in the range of 155 to 166°C.

If the nucleating agent is added in the form of a masterbatch, the amount of masterbatch added is in the range of 1.0 to 10 wt%, preferably 1.5 to 8.5 wt% and more preferably 2.0 to 30 7.0 wt%, based on the total weight of the first propylene polymer (PP1).

The spunbonded layer (S)

As outlined above, the nonwoven fabric (NF) according to the present invention comprises at least one spunbonded layer(s) (S), said spunbonded layer(s) (S) comprising spunbonded fibers (SBF).

Preferably, the spunbonded fibers (SBF) make up at least 80 wt.-% of the spunbonded layer(s) (S), more preferably at least 90 wt.-%, still more preferably at least 95 wt.-%. It is especially preferred that the spunbonded layer(s) (S) consist of the spunbonded fibers (SBF).

The spunbonded fibers (SBF) are obtained from a second propylene polymer (PP2).

The second propylene polymer (PP2) can be a propylene copolymer or a propylene homopolymer, the latter being preferred.

In case the second propylene polymer (PP2) is a propylene copolymer, the second propylene polymer (PP2) comprises monomers copolymerizable with propylene, for example comonomers such as ethylene and/or $C_4$ to $C_8$ $\alpha$-olefins, in particular ethylene and/or $C_4$ to $C_6$ $\alpha$-olefins, e.g. 1-butene and/or 1-hexene. Preferably the second propylene polymer (PP2) according to this invention comprises, especially consists of, monomers copolymerizable with propylene from the group consisting of ethylene, 1-butene and 1-hexene. More specifically the second propylene polymer (PP2) of this invention comprises - apart from propylene - units derivable from ethylene and/or 1-butene. In a preferred embodiment the second propylene polymer (PP2) comprises units derivable from ethylene and propylene only.

The comonomer content of the second propylene polymer (PP2) is in the range of 0.0 to 5.0 mol-%, yet more preferably in the range of 0.0 to 3.0 mol-%, still more preferably in the range of 0.0 to 1.0 mol-%.

It is especially preferred that the second propylene polymer (PP2) is a second propylene homopolymer (H-PP2). Regarding the term "propylene homopolymer", reference is made to the definition provided above.

The second propylene polymer (PP2), like the second propylene homopolymer (H-PP2), is featured by a moderate melt flow rate. Accordingly, the second propylene polymer (PP2), like the second propylene homopolymer (H-PP2), has a melt flow rate $MFR_2$ (final) (230 °C/2.16 kg) measured according to ISO 1133 of at least 21 g/10 min, more preferably in the range of 21 to 60 g/10 min, still more preferably in the range of 22 to 50 g/10 min, yet more preferably in the range of 23 to 37 g/10 min, like in the range of 25 to 32 g/10 min.

Unless otherwise indicated, throughout the instant invention the melt flow rate (230°C/2.16 kg) of the second propylene polymer (PP2), like the second propylene homopolymer (H-PP2), is preferably the melt flow rate (230°C/2.16 kg) after visbreaking.

Thus, it is preferred that the second propylene polymer (PP2), like the second propylene homopolymer (H-PP2), has been visbroken.

Accordingly, the melt flow rate $MFR_2$ (initial) (230°C/2.16 kg), i.e. the melt flow rate before visbreaking, of the second propylene polymer (PP2), like the second propylene homopolymer (H-PP2), is much lower, like from 0.1 to 5 g/10 min. For example, the melt flow rate $MFR_2$ (initial) (230°C/2.16 kg) of the second propylene polymer (PP2), like the second propylene homopolymer (H-PP2), before visbreaking is from 1 to 4 g/10min, like from 2 to 3.5 g/10min.

In one embodiment of the present invention, the second propylene polymer (PP2), like the second propylene homopolymer (H-PP2), has been visbroken with a visbreaking ratio [final $MFR_2$ (230°C/2.16 kg) / initial $MFR_2$ (230°C/2.16 kg)] at least 5, wherein "final $MFR_2$ (230°C/2.16 kg)" is the $MFR_2$ (230°C/2.16 kg) of the second propylene polymer (PP2), like the second propylene homopolymer (H-PP2), after visbreaking and "initial $MFR_2$ (230°C/2.16 kg)" is the $MFR_2$ (230°C/2.16 kg) of the second propylene polymer (PP2), like the second propylene homopolymer (H-PP2), before visbreaking. Preferably, the second propylene polymer (PP2), like the second propylene homopolymer (H-PP2), has been visbroken with a visbreaking ratio [final $MFR_2$ (230°C/2.16 kg) / initial $MFR_2$ (230°C/2.16 kg)] of 5 to 25, wherein "final $MFR_2$ (230°C/2.16 kg)" is the $MFR_2$ (230°C/2.16 kg) of the propylene homopolymer after visbreaking and "initial $MFR_2$ (230°C/2.16 kg)" is the $MFR_2$ (230°C/2.16 kg) of the propylene homopolymer before visbreaking. More preferably, the second propylene polymer (PP2), like the second propylene homopolymer (H-PP2), has been visbroken with a visbreaking ratio [final $MFR_2$ (230°C/2.16 kg) / initial $MFR_2$ (230°C/2.16 kg)] of 5 to 15, wherein "final $MFR_2$ (230°C/2.16 kg)" is the $MFR_2$ (230°C/2.16 kg) of the of the second propylene polymer (PP2), like the second propylene homopolymer (H-PP2), after visbreaking and "initial $MFR_2$ (230°C/2.16 kg)" is the $MFR_2$ (230°C/2.16 kg) of the second propylene polymer (PP2), like the second propylene homopolymer (H-PP2), before visbreaking.

Regarding the visbreaking conditions and visbreaking agents for the of the second propylene polymer (PP2), like the second propylene homopolymer (H-PP2), reference is made to the definitions provided above with regard to the first propylene polymer (PP1).

Preferably the second propylene polymer (PP2), like the second propylene homopolymer (H-PP2), is isotactic. However, it is preferred that the second propylene polymer (PP2), like the second propylene homopolymer (H-PP2), has a pentad concentration (mmmm%), i.e. below 93.7 %, more preferably in the range of 85.0 to 93.0 %, still more preferably in the range of 90.0 to 92.2 %.

A further characteristic of the second propylene polymer (PP2), like the second propylene homopolymer (H-PP2), is the low amount of misinsertions of propylene within the polymer chain, which indicates that the second propylene polymer (PP2), like the second propylene homopolymer (H-PP2), is produced in the presence of a Ziegler-Natta catalyst, preferably in the presence of a Ziegler-Natta catalyst (ZN-C2) as defined in more detail below. Accordingly, the second propylene polymer (PP2), like the second propylene homopolymer (H-PP2), is preferably featured by low amount of 2,1 erythro regio-defects, i.e. of equal or below 0.4 mol.-%, more preferably of equal or below than 0.2 mol.-%, like of not more than 0.1 mol.-%, determined by $^{13}$C-NMR spectroscopy. In an especially preferred embodiment no 2,1 erythro regio-defects are detectable.

It is preferred that the second propylene polymer (PP2), like the second propylene homopolymer (H-PP2), is featured by rather high cold xylene soluble (XCS) content, i.e. by a xylene cold soluble (XCS) of more than 2.6 wt.-%. Accordingly, the second propylene polymer (PP2), like the second propylene homopolymer (H-PP2), has preferably a xylene cold soluble content (XCS) in the range of more than 2.6 to 4.5 wt.-%, more preferably in the range of 3.0 to 4.0 wt.-%, still more preferably in the range of 3.1 to 3.5 wt.-%.

The amount of xylene cold solubles (XCS) additionally indicates that the second propylene polymer (PP2), like the second propylene homopolymer (H-PP2), is preferably free of any elastomeric polymer component, like an ethylene propylene rubber. In other words, the second propylene polymer (PP2), like the second propylene homopolymer (H-PP2), shall be not a heterophasic polypropylene, i.e. a system consisting of a polypropylene matrix in which an elastomeric phase is dispersed. Such systems are featured by a rather high xylene cold soluble content.

The amount of xylene cold solubles (XCS) additionally indicates that the second propylene polymer (PP2), like the second propylene homopolymer (H-PP2), preferably does not contain elastomeric (co)polymers forming inclusions as a second phase for improving mechanical properties. A polymer containing elastomeric (co)polymers as insertions of a second phase would by contrast be called heterophasic and is preferably not part of the present invention. The presence of second phases or the so called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

Accordingly, it is preferred that the second propylene polymer (PP2), like the second propylene homopolymer (H-PP2), according to this invention has no glass transition temperature below -30, preferably below -25 °C, more preferably below -20 °C.

On the other hand, in one preferred embodiment the second propylene polymer (PP2), like the second propylene homopolymer (H-PP2), according to this invention has a glass transition temperature in the range of -12 to 5 °C, more preferably in the range of -10 to 4 °C.

Further, the second propylene polymer (PP2), like the second propylene homopolymer (H-PP2), is featured by a rather low weight molecular weight. Accordingly, it is preferred that the second propylene polymer (PP2), like the second propylene homopolymer (H-PP2), has a weight molecular weight Mw (initial) before visbreaking below 500 kg/mol, more preferably in the range of 100 to 400 kg/mol, still more preferably in the range of 250 kg/mol to 350 kg/mol.

Additionally or alternatively to the previous paragraph, it is preferred that the second propylene polymer (PP2), like the second propylene homopolymer (H-PP2), has an initial molecular weight distribution (Mw(initial)/Mn(initial)) before visbreaking above 4.0, more preferably in the range of 4.0 to 10.0, still more preferably in the range of 4.5 to 8.0.

As outlined above, it is preferred that the second propylene polymer (PP2), like the second propylene homopolymer (H-PP2), has been visbroken.

Accordingly, it is preferred that the second propylene polymer (PP2), like the second propylene homopolymer (H-PP2), has a final molecular weight distribution (Mw(final)/Mn(final)) after visbreaking of at least 3.0, more preferably at least 3.5, still more preferably in the range of 3.5 to 5.0.

It is preferred that the second propylene polymer (PP2), like the second propylene homopolymer (H-PP2), has a rather low melting temperature. Therefore, the second propylene polymer (PP2), like the second propylene homopolymer (H-PP2), has a melting temperature Tm measured by differential scanning calorimetry (DSC) below 164 °C, i.e. in the range of 150 °C to below 164 °C, more preferably in the range of 155 °C to below 163 °C.

Further it is preferred that the second propylene polymer (PP2), like the second propylene homopolymer (H-PP2), has a crystallization temperature Tc measured by differential scanning calorimetry (DSC) of equal or more than 110 °C, more preferably in the range of 110 to 128 °C, more preferably in the range of 114 to 120 °C.

The second propylene polymer (PP2), like the second propylene homopolymer (H-PP2), is preferably featured by high stiffness. Accordingly the second propylene polymer (PP2), like the second propylene homopolymer (H-PP2), preferably has a rather high tensile modulus. Accordingly it is preferred that the second propylene polymer (PP2), like the second propylene homopolymer (H-PP2), has a tensile modulus measured at 23 °C according to ISO 527-1 (cross head speed 1 mm/min) of below 1,600 MPa, more preferably in the range of 1,000 to 1,500 MPa, still more preferably in the range of 1,100 to 1,400 MPa.

Preferably, the second propylene polymer (PP2), like the second propylene homopolymer (H-PP2), is obtained by polymerizing propylene in the presence of a Ziegler-Natta catalyst as defined below. More preferably, the second propylene polymer (PP2), like the second propylene homopolymer (H-PP2), according to this invention is obtained by a process as defined in detail below by using the Ziegler-Natta catalyst.

The second propylene polymer (PP2), like the second propylene homopolymer (H-PP2), can comprise, more preferably can consist of, two fractions, namely a first propylene homopolymer fraction (H-PP2a) and a second propylene homopolymer fraction (H-PP2b). Preferably the weight ratio between the first propylene homopolymer fraction (H-PP2a) and the second propylene homopolymer fraction (H-PP2b) [(H-PP2a):(H-PP2b)] is 70:30 to 40:60, more preferably 65:35 to 45:55.

The first propylene homopolymer fraction (H-PP2a) and the second propylene homopolymer fraction (H-PP2b) may differ in the melt flow rate. However, it is preferred that the melt flow rate $MFR_2$ (230 °C) of the first propylene homopolymer fraction (H-PP2a) and of the second propylene homopolymer fraction (H-PP2b) are nearly identical, i.e. differ not more than 15% as calculated from the lower of the two values, preferably differ not more than 10%, like differ not more than 7%.

The second propylene polymer (PP2), like the second propylene homopolymer (H-PP2), of the present invention may comprise further components. However, it is preferred that the inventive second propylene polymer (PP2), like the second propylene homopolymer (H-PP2), comprises as polymer components only the second propylene polymer (PP2), like the second propylene homopolymer (H-PP2), as defined in the instant invention. Accordingly, the amount of second propylene polymer (PP2), like the second propylene homopolymer (H-PP2), may not result in 100.0 wt.-% based on the total second propylene polymer (PP2), like the second propylene homopolymer (H-PP2). Thus, the remaining part up to 100.0 wt.-% may be accomplished by further additives known in the art. However, this remaining part shall be not more than 5.0 wt.-%, like not more than 3.0 wt.-% within the total second propylene polymer (PP2), like the second propylene homopolymer (H-PP2). For instance, the inventive second propylene polymer (PP2), like the second propylene homopolymer (H-PP2), may comprise additionally small amounts of additives selected from the group consisting of antioxidants, stabilizers, fillers, colorants, nucleating agents and antistatic agents. In general, they are incorporated during granulation of the pulverulent product obtained in the polymerization. Accordingly, the second propylene polymer (PP2), like the second propylene homopolymer (H-PP2), constitutes at least to 95.0 wt.-%, more preferably at least 97.0 wt.-% to the total second propylene polymer (PP2), like the second propylene homopolymer (H-PP2).

In case the second propylene polymer (PP2), like the second propylene homopolymer (H-PP2), comprises a α-nucleating agent, it is preferred that it is free of β-nucleating agents. The α-nucleating agent is preferably selected from the group consisting of

( i ) salts of monocarboxylic acids and polycarboxylic acids, e.g. sodium benzoate or aluminum tert-butylbenzoate, and
( ii ) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
( iii ) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
( iv ) vinylcycloalkane polymer and vinylalkane polymer (as discussed in more detail below), and
( v ) mixtures thereof.

Such additives are generally commercially available and are described, for example, in "Plastic Additives Handbook", pages 871 to 873, 5th edition, 2001 of Hans Zweifel.

Preferably the propylene homopolymer contains up to 5.0 wt.-% of the α-nucleating agent. In a preferred embodiment, the propylene homopolymer contains not more than 500 ppm, more preferably of 0.025 to 200 ppm, more preferably of 0.1 to 200 ppm, still more preferably 0.3 to 200 ppm, most preferably 0.3 to 100 ppm of a a-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, sodium 2,2'-methylenebis (4, 6,-di-tert-butylphenyl) phosphate, vinylcycloalkane polymer, vinylalkane polymer, and mixtures thereof.

As outlined above, the spunbonded layer (S) according to the present invention comprises spunbonded fibers (SBF) obtained from the second propylene polymer (PP2). The spunbonded fibers (SBF) preferably comprise at least 95 wt.-%, based on the total weight of the melt blown fibers, of the second propylene polymer (PP2), like the second propylene homopolymer (H-PP2), as described above. It is especially preferred that the spunbonded fibers (SBF) consist of the second propylene polymer (PP2), like the second propylene homopolymer (H-PP2).

More preferably, the spunbonded layer (S) according to the present invention comprises a spunbonded web (SBW) made of the spunbonded fibers (SBF) as described above. It is preferred that the spunbonded web (SBW) has a weight per unit area of at least 0.8 $g/m^2$, more preferably of at least 1 $g/m^2$, yet more preferably in the range of 1 to 40 $g/m^2$, still more preferably in the range of 1.3 to 30 $g/m^2$.

The second propylene polymer (PP2), like the second propylene homopolymer (H-PP2), according to this invention is preferably produced in the presence of

(a) a Ziegler-Natta catalyst (ZN-C2) comprising compounds (TC) of a transition metal of Group 4 to 6 of IUPAC, a Group 2 metal compound (MC) and an internal donor (ID), wherein said internal donor (ID) is a non-phthalic compound, preferably is a non-phthalic acid ester and still more preferably is a diester of non-phthalic dicarboxylic acids;

(b) optionally a co-catalyst (Co), and

(c) optionally an external donor (ED).

It is preferred that the internal donor (ID) is selected from optionally substituted malonates, maleates, succinates, glutarates, cyclohexene-1,2-dicarboxylates, benzoates and derivatives and/or mixtures thereof, preferably the internal donor (ID) is a citraconate. Additionally or alternatively, the molar-ratio of co-catalyst (Co) to external donor (ED) [Co/ED] is 5 to 45.

Preferably, the second propylene polymer (PP2), like the second propylene homopolymer (H-PP2), is produced in a sequential polymerization process as further described below comprising at least two reactors (R1) and (R2), in the first reactor (R1) the first propylene homopolymer fraction (H-PP2a) is produced and subsequently transferred into the second reactor (R2), in the second reactor (R2) the second propylene homopolymer fraction (H-PP2b) is produced in the presence of the first propylene homopolymer fraction (H-PP2a).

The process for the preparation of the propylene homopolymer as well as the Ziegler-Natta catalyst (ZN-C2) are further described in detail below.

In view of the above, it is appreciated that the propylene homopolymer is free of phthalic acid esters as well as their respective decomposition products, i.e. phthalic acid esters, typically used as internal donor of Ziegler-Natta (ZN) catalysts. Preferably, the propylene homopolymer is free of phthalic compounds as well as their respective decomposition products, i.e. phthalic compounds typically used as internal donor of Ziegler-Natta (ZN) catalysts.

The term "free of' phthalic acid esters, preferably phthalic compounds, in the meaning of the present invention refers to a propylene homopolymer in which no phthalic acid esters as well no respective decomposition products, preferably no phthalic compounds as well as no respective decomposition products at all, are detectable.

As already indicated above, the second propylene polymer (PP2), like the second propylene homopolymer (H-PP2), is preferably produced in a sequential polymerization process.

The term "sequential polymerization system" indicates that the second propylene polymer (PP2), like the second propylene homopolymer (H-PP2), is produced in at least two reactors connected in series. Accordingly, the present polymerization system comprises at least a first polymerization reactor (R1) and a second polymerization reactor (R2), and optionally a third polymerization reactor (R3). The term "polymerization reactor" shall indicate that the main polymerization takes place. Thus, in case the process consists of two polymerization reactors, this definition does not exclude the option that the overall system comprises for instance a pre-polymerization step in a pre-polymerization reactor. The term "consist of" is only a closing formulation in view of the main polymerization reactors.

Preferably, at least one of the two polymerization reactors (R1) and (R2) is a gas phase reactor (GPR). Still more preferably the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR). Accordingly the average concentration of the first fraction ($1^{st}$ F) of the second propylene polymer (PP2), like the second propylene homopolymer (H-PP2), (i.e. the first propylene homopolymer fraction (H-PP2a), in the polymer slurry within the loop reactor (LR) is typically from 15 wt.-% to 55 wt.-%, based on the total weight of the polymer slurry within the loop reactor (LR). In one preferred embodiment of the present invention the average concentration of the first propylene homopolymer fraction (H-PP2a) in the polymer slurry within the loop reactor (LR) is from 20 wt.-% to 55 wt.-% and more preferably from 25 wt.-% to 52 wt.-%, based on the total weight of the polymer slurry within the loop reactor (LR).

Preferably the propylene homopolymer of the first polymerization reactor (R1), i.e. the first propylene homopolymer fraction (H-PP2a), more preferably the polymer slurry of the loop reactor (LR) containing the first propylene homopolymer fraction (H-PP2a), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the first propylene homopolymer fraction (H-PP2a), is led directly to the next stage gas phase reactor.

Alternatively, the propylene homopolymer of the first polymerization reactor (R1), i.e. the first propylene homopolymer fraction (H-PP2a), more preferably polymer slurry of the loop reactor (LR) containing the first propylene homopolymer fraction (H-PP2a), may be also directed into a flash step or through a further concentration step before fed into the second polymerization reactor (R2), i.e. into the gas phase reactor (GPR). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2), and any subsequent reactor, for instance the third polymerization reactor (R3), are preferably gas phase reactors (GPRs). Such gas phase reactors (GPR) can be any mechanically mixed or fluid bed reactors. Preferably the gas phase reactors (GPRs) comprise a mechanically agitated fluid bed reactor with gas velocities of at least 0.2 m/sec. Thus it is appreciated that the gas phase reactor is a fluidized bed type reactor preferably with a mechanical stirrer.

Thus, in a preferred embodiment the first polymerization reactor (R1) is a slurry reactor (SR), like loop reactor (LR), whereas the second polymerization reactor (R2) and any optional subsequent reactor, like the third polymerization reactor (R3), are gas phase reactors (GPRs). Accordingly for the instant process at least two, preferably two polymerization reactors (R1) and (R2) or three polymerization reactors (R1), (R2) and (R3), namely a slurry reactor (SR), like loop reactor (LR) and a (first) gas phase reactor (GPR1) and optionally a second gas phase reactor (GPR2), connected in series are used. If needed prior to the slurry reactor (SR) a pre-polymerization reactor is placed.

The Ziegler-Natta catalyst (ZN-C2) is fed into the first polymerization reactor (R1) and is transferred with the polymer (slurry) obtained in the first polymerization reactor (R1) into the subsequent reactors. If the process covers also a pre-polymerization step it is preferred that all of the Ziegler-Natta catalyst (ZN-C2) is fed in the pre-polymerization reactor. Subsequently the pre-polymerization product containing the Ziegler-Natta catalyst (ZN-C2) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Especially good results are achieved in case the temperature in the reactors is carefully chosen.

Accordingly it is preferred that the operating temperature in the first polymerization reactor (R1) is in the range of 62 to 85 °C, more preferably in the range of 65 to 82 °C, still more preferably in the range of 67 to 80 °C.

Alternatively or additionally to the previous paragraph it is preferred that the operating temperature in the second polymerization reactor (R2) and optional in the third reactor (R3) is in the range of 75 to 95 °C, more preferably in the range of 78 to 92 °C.

Preferably the operating temperature in the second polymerization reactor (R2) is equal to or higher than the operating temperature in the first polymerization reactor (R1). Accordingly it is preferred that the operating temperature

(a) in the first polymerization reactor (R1) is in the range of 62 to 85 °C, more preferably in the range of 65 to 82 °C, still more preferably in the range of 67 to 80 °C, like 70 to 80 °C;
and
(b) in the second polymerization reactor (R2) is in the range of 62 to 95 °C, more preferably in the range of 65 to 92 °C, still more preferably in the range of 67 to 88 °C, with the proviso that the operating temperature in the in the second polymerization reactor (R2) is equal or higher to the operating temperature in the first polymerization reactor (R1).

Typically the pressure in the first polymerization reactor (R1), preferably in the loop reactor (LR), is in the range from 20 to 80 bar, preferably 30 to 70 bar, like 35 to 65 bar, whereas the pressure in the second polymerization reactor (R2), i.e. in the (first) gas phase reactor (GPR1), and optionally in any subsequent reactor, like in the third polymerization reactor (R3), e.g. in the second gas phase reactor (GPR2), is in the range from 5 to 50 bar, preferably 15 to 40 bar.

Preferably hydrogen is added in each polymerization reactor in order to control the molecular weight, i.e. the melt flow rate $MFR_2$.

Preferably the average residence time is rather long in the polymerization reactors (R1) and (R2). In general, the average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

Accordingly the average residence time ($\tau$) in the first polymerization reactor (R1) is preferably at least 15 min, more preferably in the range of 15 to 80 min, still more preferably in the range of 20 to 60 min, like in the range of 24 to 50 min, and/or the average residence time ($\tau$) in the second polymerization reactor (R2) is preferably at least 70 min, more preferably in the range of 70 to 220 min, still more preferably in the range of 80 to 210 min, yet more preferably in the range of 90 to 200 min, like in the range of 90 to 190 min. Preferably the average residence time ($\tau$) in the third polymerization reactor (R3) - if present - is preferably at least 30 min, more preferably in the range of 30 to 120 min, still more preferably in the range of 40 to 100 min, like in the range of 50 to 90 min.

As mentioned above the preparation of the propylene homopolymer can comprise in addition to the (main) polymerization of the propylene homopolymer in the at least two polymerization reactors (R1, R3 and optional R3) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the Ziegler-Natta catalyst (ZN-C2). According to this embodiment the Ziegler-Natta catalyst (ZN-C2), the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst (ZN-C2), the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the Ziegler-Natta catalyst (ZN-C2) and the polypropylene (Pre-PP) produced in the pre-polymerization reactor (PR) is obtained. Preferably the Ziegler-Natta catalyst (ZN-C2) is (finely) dispersed in the polypropylene (Pre-PP). In other words, the Ziegler-Natta catalyst (ZN-C2) particles introduced in the pre-polymerization reactor (PR) split into smaller fragments which are evenly distributed within the growing polypropylene (Pre-PP). The sizes of the introduced Ziegler-Natta catalyst (ZN-C2) particles as well as of the obtained fragments are not of essential relevance for the instant invention and within the skilled knowledge.

As mentioned above, if a pre-polymerization is used, subsequent to said pre-polymerization, the mixture (MI) of the Ziegler-Natta catalyst (ZN-C2) and the polypropylene (Pre-PP) produced in the pre-polymerization reactor (PR) is transferred to the first reactor (R1). Typically the total amount of the polypropylene (Pre-PP) in the final propylene copolymer (R-PP) is rather low and typically not more than 5.0 wt.-%, more preferably not more than 4.0 wt.-%, still more preferably in the range of 0.5 to 4.0 wt.-%, like in the range 1.0 of to 3.0 wt.-%.

In case that pre-polymerization is not used, propylene and the other ingredients such as the Ziegler-Natta catalyst (ZN-C2) are directly introduced into the first polymerization reactor (R1).

Accordingly, the propylene homopolymer is preferably produced in a process comprising the following steps under the conditions set out above

    (a) in the first polymerization reactor (R1), i.e. in a loop reactor (LR), propylene is polymerized obtaining a first propylene homopolymer fraction (H-PP2a) of the propylene homopolymer (H-PP2),

    (b) transferring said first propylene homopolymer fraction (H-PP2a) to a second polymerization reactor (R2),

    (c) in the second polymerization reactor (R2) propylene is polymerized in the presence of the first propylene homopolymer fraction (H-PP2a) obtaining a second propylene homopolymer fraction (H-PP2b) of the propylene homopolymer, said first propylene homopolymer fraction (H-PP2a) and said second propylene homopolymer fraction (H-PP2b) form the propylene homopolymer.

A pre-polymerization as described above can be accomplished prior to step (a).

As pointed out above in the specific process for the preparation of the propylene homopolymer as defined above a Ziegler-Natta catalyst (ZN-C2) must be used. Accordingly the Ziegler-Natta catalyst (ZN-C2) will be now described in more detail.

The catalyst used in the present invention is a solid Ziegler-Natta catalyst (ZN-C2), which comprises compounds (TC) of a transition metal of Group 4 to 6 of IUPAC, like titanium, a Group 2 metal compound (MC), like a magnesium, and an internal donor (ID) being a non-phthalic compound, preferably a non-phthalic acid ester, still more preferably being a diester of non-phthalic dicarboxylic acids as described in more detail below. Thus, the catalyst is fully free of undesired phthalic compounds. Further, the solid catalyst is free of any external support material, like silica or $MgCl_2$, but the catalyst is selfsupported.

The Ziegler-Natta catalyst (ZN-C2) can be further defined by the way as obtained.

Accordingly, the Ziegler-Natta catalyst (ZN-C2) is preferably obtained by a process comprising the steps of

    a)

a$_1$) providing a solution of at least a Group 2 metal alkoxy compound (Ax) being the reaction product of a Group 2 metal compound (MC) and an alcohol (A) comprising in addition to the hydroxyl moiety at least one ether moiety optionally in an organic liquid reaction medium;

or

a$_2$) a solution of at least a Group 2 metal alkoxy compound (Ax') being the reaction product of a Group 2 metal compound (MC) and an alcohol mixture of the alcohol (A) and a monohydric alcohol (B) of formula ROH, optionally in an organic liquid reaction medium;

or

a$_3$) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; and

b) adding said solution from step a) to at least one compound (TC) of a transition metal of Group 4 to 6 and

c) obtaining the solid catalyst component particles,

and adding a non-phthalic internal electron donor (ID) at any step prior to step c).

The internal donor (ID) or precursor thereof is added preferably to the solution of step a).

According to the procedure above the Ziegler-Natta catalyst (ZN-C2) can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

In precipitation method combination of the solution of step a) with at least one transition metal compound (TC) in step b) is carried out and the whole reaction mixture is kept at least at 50 °C, more preferably in the temperature range of 55 to 110 °C, more preferably in the range of 70 to 100 °C, to secure full precipitation of the catalyst component in form of a solid particles (step c).

In emulsion - solidification method in step b) the solution of step a) is typically added to the at least one transition metal compound (TC) at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention.

In a preferred embodiment in step a) the solution of a$_2$) or a$_3$) are used, i.e. a solution of (Ax') or a solution of a mixture of (Ax) and (Bx).

Preferably the Group 2 metal (MC) is magnesium.

The magnesium alkoxy compounds (Ax), (Ax') and (Bx) can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are C$_2$ to C$_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched C$_6$-C$_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different C$_1$-C$_{20}$ alkyl, preferably C$_2$-C$_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R" (OH)$_m$ to obtain said magnesium alkoxide compounds. Preferred polyhydric alcohols, if used, are alcohols, wherein R" is a straight-chain, cyclic or branched C$_2$ to C$_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt-% solution in a solvent as indicated above. Typical commercially available Mg compound, especially dialkyl magnesium solutions are 20 - 40 wt-% solutions in toluene or heptanes.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium comound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with a aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 $g/m^2$, more preferably below 10 $g/m^2$. Typically the amount of Ti is 1 to 6 wt-%, Mg 10 to 20 wt-% and donor 10 to 40 wt-% of the catalyst composition.

Detailed description of preparation of catalysts is disclosed in WO 2012/007430, EP2610271, EP 261027 and EP2610272 which are incorporated here by reference.

The Ziegler-Natta catalyst (ZN-C2) is preferably used in association with an alkyl aluminum cocatalyst and optionally external donors.

As further component in the instant polymerization process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, isopentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors (ED) are the pentyl dimethoxy silane donor (D-donor) or the cyclohexylmethyl dimethoxy silane donor (C-Donor), the latter especially preferred.

In addition to the Ziegler-Natta catalyst (ZN-C2) and the optional external donor (ED) a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as $AlH_3$, of less than 1.0 wt% with respect to the triethyl aluminium (TEAL). More preferably, the hydride content is less than 0.5 wt%, and most preferably the hydride content is less than 0.1 wt%.

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] must be in the range of 5 to 45, preferably is in the range of 5 to 35, more preferably is in the range of 5 to 25; and optionally

(b) the mol-ratio of co-catalyst (Co) to titanium compound (TC) [Co/TC] must be in the range of above 80 to 500, preferably is in the range of 100 to 350, still more preferably is in the range of 120 to 300.

**The article**

The present invention is further directed to an article comprising the nonwoven fabric (NF) as described above.

Thus, the present invention is also directed to an article selected from the group consisting of filtration medium (filter), diaper, sanitary napkin, panty liner, incontinence product for adults, protective clothing, surgical drape, surgical gown, and surgical wear, comprising the inventive nonwoven fabric (NF).

In the following the present invention is further illustrated by means of examples.

**EXAMPLES**

**A. Measuring methods**

The following definitions of terms and determination methods apply for the above general description of the invention including the claims as well as to the below examples unless otherwise defined.

**Quantification of microstructure by NMR spectroscopy**

Quantitative nuclear-magnetic resonance (NMR) spectroscopy was used to quantify the isotacticity and regio-regularity of the propylene homopolymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For propylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm\ /\ \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene: [21e] mol.-% = 100 $*$ ($P_{21e}$ / $P_{total}$)

**MFR$_2$ (230 °C)** is measured according to ISO 1133 (230 °C, 2.16 kg load)

**Number average molecular weight (M$_n$), weight average molecular weight (M$_w$) and molecular weight distribution (MWD)**

Molecular weight averages (Mw, Mn), and the molecular weight distribution (MWD), i.e. the Mw/Mn (wherein Mn is the number average molecular weight and Mw is the weight average molecular weight), were determined by Gel Permeation

Chromatography (GPC) according to ISO 16014-4:2003 and ASTM D 6474-99. A PolymerChar GPC instrument, equipped with infrared (IR) detector was used with 3 x Olexis and lx Olexis Guard columns from Polymer Laboratories and 1 ,2,4-trichlorobenzene (TCB, stabilized with 250 mg/L 2,6-Di tert butyl-4-methyl-phenol) as solvent at 160 °C and at a constant flow rate of 1 mL/min. 200 μ⍭. of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**The xylene soluble fraction at room temperature (XS, wt.-%):** The amount of the polymer soluble in xylene is determined at 25 °C according to ISO 16152; 5th edition; 2005-07-01.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and heat of crystallization ($H_c$) are determined from the cooling step, while melting temperature ($T_m$) and heat of fusion ($H_f$) are determined from the second heating step.

**The glass transition temperature Tg** is determined by dynamic mechanical analysis according to ISO 6721-7. The measurements are done in torsion mode on compression moulded samples (40x10x1 mm$^3$) between -100 °C and +150 °C with a heating rate of 2 °C/min and a frequency of 1 Hz.

**The tensile modulus** was measured according to ISO 527-2 (cross head speed = 1 mm/min; test speed 50 mm/min at 23 °C) using injection molded specimens as described in EN ISO 1873-2 (dog bone shape, 4 mm thickness). The measurement is done after 96 h conditioning time of the specimen.

**Grammage of the web**

The unit weight (grammage) of the webs in g/m$^2$ was determined in accordance with ISO 536:1995.

**Average fibre diameter in the web**

The number average fibre diameter was determined using scanning electron microscopy (SEM). A representative part of the web was selected and an SEM micrograph of suitable magnification was recorded, then the diameter of 20 fibres was measured and the number average calculated.

**Hydrohead**

The hydrohead or water resistance as determined by a hydrostatic pressure test is determined according to the WSP (wordwide strategic partners) standard test WSP 80.6 (09) as published in December 2009. This industry standard is in turn based on ISO 811:1981 and uses specimens of 100 cm$^2$ at 23°C with purified water as test liquid and a rate of increase of the water pressure of 10 cm/min.

**Air permeability**

The air permeability was determined in accordance with DIN ISO 9237.

**B. Examples**

The catalyst used in the polymerization process for the propylene homopolymer (PP2) for the spunbonded layer (S) of the inventive example (IE) was prepared as follows:

**Used chemicals:**

20 % solution in toluene of butyl ethyl magnesium (Mg(Bu)(Et), BEM), provided by Chemtura
2-ethylhexanol, provided by Amphochem
3-Butoxy-2-propanol - (DOWANOL™ PnB), provided by Dow
bis(2-ethylhexyl)citraconate, provided by SynphaBase
TiCl$_4$, provided by Millenium Chemicals
Toluene, provided by Aspokem
Viscoplex® 1-254, provided by Evonik
Heptane, provided by Chevron

***Preparation of a Mg alkoxy compound***

Mg alkoxide solution was prepared by adding, with stirring (70 rpm), into 11 kg of a 20 wt-% solution in toluene of butyl ethyl magnesium (Mg(Bu)(Et)), a mixture of 4.7 kg of 2-ethylhexanol and 1.2 kg of butoxypropanol in a 20 1 stainless steel reactor. During the addition the reactor contents were maintained below 45 °C. After addition was completed, mixing (70 rpm) of the reaction mixture was continued at 60 °C for 30 minutes. After cooling to room temperature 2.3 kg g of the donor bis(2-ethylhexyl)citraconate was added to the Mg-alkoxide solution keeping temperature below 25 °C. Mixing was continued for 15 minutes under stirring (70 rpm).

**Preparation of solid catalyst component**

20.3 kg of $TiCl_4$ and 1.1 kg of toluene were added into a 20 1 stainless steel reactor. Under 350 rpm mixing and keeping the temperature at 0 °C, 14.5 kg of the Mg alkoxy compound prepared in example 1 was added during 1.5 hours. 1.7 1 of Viscoplex® 1-254 and 7.5 kg of heptane were added and after 1 hour mixing at 0 °C the temperature of the formed emulsion was raised to 90 °C within 1 hour. After 30 minutes mixing was stopped catalyst droplets were solidified and the formed catalyst particles were allowed to settle. After settling (1 hour), the supernatant liquid was siphoned away. Then the catalyst particles were washed with 45 kg of toluene at 90°C for 20 minutes followed by two heptane washes (30 kg, 15 min). During the first heptane wash the temperature was decreased to 50 °C and during the second wash to room temperature.

The thus obtained catalyst was used along with triethyl-aluminium (TEAL) as co-catalyst and dicyclopentyl dimethoxy silane (D-Donor) as donor for example IE1 and cyclohexylmethyl dimethoxy silane (C-Donor) as donor for example IE2, respectively.

The catalyst used in the polymerization process for the propylene homopolymer (PP1) for the melt blown layer (M) of the inventive examples (IE3) is the commercial catalyst ZN180M by Lyondell Basell used along with cyclohexylmethyl dimethoxy silane (C-Donor) as donor.

The aluminium to donor ratio, the aluminium to titanium ratio and the polymerization conditions are indicated in table 1.

**Table 1:** Preparation of base polymer PP1 (IE3) and PP2 (IE1, IE2)

|  |  | IE1 | IE2 | IE3 |
|---|---|---|---|---|
| Prepolymerization |  |  |  |  |
| TEAL/Ti | [mol/mol] | 102 | 100 | 100 |
| TEAL/donor | [mol/mol] | 6 | 8 | 10 |
| Temperature | [°C] | 30 | 30 | 20 |
| res.time | [h] | 0.3 | 0.3 | 0.3 |
| Donor | [-] | D | C | C |
| **Loop** |  |  |  |  |
| Temperature | [°C] | 80 | 70 | 70 |
| Pressure | [kPa] | 5500 | 5500 | 5500 |
| Split | 1%] | 60 | 100 | 100 |
| H2/C3 ratio | [mol/kmol] | 0.5 | 0.7 | 4 |
| C2/C3 | [mol/kmoll | 1.2 | 0 | 0 |
| $MFR_2$ | [g/10mm] | 2.8 | 2.7 | 80 |
| XCS | [wt.-%] | 0.3 | 3.4 | 2.6 |
| **GPR 1** |  |  |  |  |
| Temperature | [°C] | 80 |  |  |
| Pressure | [kPa] | 2100 |  |  |
| Split | [%] | 40 |  |  |
| H2/C3 ratio | [mol/kmol] | 8 |  |  |
| C2/C3 ratio | mol/kmol] | 0.4 |  |  |
| **Properties of final base polymer** |  |  |  |  |
| $MFR_2$ | [g/10min] | 2.3 | 2.7 | 81 |
| XCS | [ wt.-%] | 3.1 | 3.5 | 2.6 |
| C2 | [wt.-%] | 0.3 | 0 | 0 |

(continued)

| Properties of final base polymer | | | | |
|---|---|---|---|---|
| Mw | [kg/mol] | 328 | 310 | 139,500 |
| MWD | [-] | 8 | 6.5 | 6.7 |
| Tm | [°C] | 160 | 162 | 163 |
| Tg | [°C] | -0.5 | 0 | 0.1 |

As comparative example CE1 for the spunbonded layer (S), HG455FB has been used which is a commercial grade form Borealis having a MFR of 27 g/10min. The details are listed in Table 2.

As comparative air example CE2 for the melt blown layer (M), HL508FB has been used which is a commercial grade from Borealis having a MFR of 800 g/10min. Basic properties are listed in Table 2.

The polymers IE1, IE2, IE3, CE1 and CE2 have been mixed with 400 ppm calcium Stearate (CAS No. 1592-23-0) and 1,000 ppm Irganox 1010 supplied by BASF AG, Germany (Pentaerythrityl-tetrakis(3-(3',5'-di-tert. butyl-4-hydroxyphenyl)-propionate, CAS No. 6683-19-8).

In a second step the propylene homopolymers IE1, IE2, IE3, CE1 and CE2 have been visbroken by using a co-rotating twin-screw extruder at 200-230°C and using an appropriate amount of (tert.-butylperoxy)-2,5-dimethylhexane (Trigonox 101, distributed by Akzo Nobel, Netherlands) to achieve the target $MFR_2$. The properties of the propylene homopolymers after visbreaking are summarized in table 2.

**Table** 2: Properties of the inventive and comparative examples after visbreaking

| | | Spunbonded (S) | | | Melt blown (M) | |
|---|---|---|---|---|---|---|
| | | IE1 | IE2 | CE1 | IE3 | CE2 |
| Isotacticity(mmmm) | [%] | n.a. | 92.1 | 93.7 | 95.3 | 94.1 |
| C2 content | [wt.-%] | 0.3 | 0 | 0 | 0 | 0 |
| MFR final | [g/10min] | 27 | 27 | 27 | 800 | 800 |
| MWD | [-] | 4.7 | 4.4 | 4.3 | 4 | 4.2 |
| 2,1 regio defects | [%] | n.d. | n.d. | n.d. | n.d. | n.d. |
| Tg | [°C] | -0.3 | 0 | 0 | 1 | 2 |
| Tm | [°C] | 162 | 161 | 164 | 162 | 160 |
| n.d. = not detected n.a. = not applicable | | | | | | |

**Table 3:** Processing conditions for the production and properties of the nonwoven fabrics

| Example | | A | B | C | D |
|---|---|---|---|---|---|
| **S-Extruder 1** | | | | | |
| Material | [-] | IE1 | IE1 | IE1 | CE1 |
| Melt temperature | [°C] | 248 | 248 | 248 | 251 |
| Process air temperature | [°C] | 20 | 20 | 20 | 20 |
| Pressure | [Pa] | 4000 | 4000 | 4000 | 4100 |
| Throughput | [kg/h] | 221 | 221 | 221 | 224 |
| Line speed | [m/min] | 600 | 600 | 600 | 600 |
| **M-Extruder 1** | | | | | |
| Material | [-] | IE3 | IE3 | IE3 | CE2 |
| DCD | [mm] | 110 | 130 | 130 | 130 |

(continued)

| M-Extruder 1 | | | | | |
|---|---|---|---|---|---|
| Melt temperature dietip | [°C] | 247 | 247 | 246 | 254 |
| Melt temperature spinpump | [°C] | 292 | 292 | 304 | 308 |
| Secondary air temperature | [°C] | 33 | 33 | 33 | 33 |
| Secondary air blower | [rpm] | 1800 | 1800 | 1800 | 2000 |
| Process air temperature | [°C] | 270 | 270 | 270 | 280 |
| Process air volume | [Nm$^3$/h] | 1100 | 1100 | 1100 | 1100 |
| Throughput | [kg/h] | 43 | 43 | 43 | 44 |
| **M-Extruder 2** | | | | | |
| Material | [-] | IE3 | IE3 | IE3 | CE2 |
| DCD | [mm] | 110 | 130 | 130 | 130 |
| Melt temperature dietip | [°C] | 295 | 295 | 265 | 260 |
| Melt temperature spinpump | [°C] | 263 | 263 | 307 | 311 |
| Process air temperature | [°C] | 270 | 270 | 270 | 280 |
| Process air volume | [Nm$^3$/h] | 1050 | 1050 | 1050 | 1100 |
| Throughput | [kg/h] | 47 | 47 | 47 | 47 |
| **S-Extruder 2** | | | | | |
| Material | [-] | IE1 | IE1 | IE1 | CE1 |
| Melt temperature | [°C] | 250 | 250 | 250 | 249 |
| Process air temperature | [°C] | 20 | 20 | 20 | 20 |
| Pressure | [Pa] | 4000 | 4000 | 4000 | 4000 |
| Throughput | [kg/h] | 220 | 220 | 220 | 221 |
| Line speed | [m/min] | 600 | 600 | 600 | 600 |
| **Web performance** | | | | | |
| CD elongation | [%] | 68 | nd | 75 | 69 |
| MD elongation | [%] | 68 | nd | 75 | 53 |
| CD tensile strength | [N/5cm] | 17 | nd | 15 | 13 |
| MD tensile strength | [N/5cm] | 29 | nd | 29 | 31 |
| Air permeability | [mm/s] | 2412 | nd | 2356 | nd |
| Hydrohead | [mbar] | 20.0 | 18.1 | 20.1 | 16.3 |
| Fabric weight | [g/m$^2$] | 11+2 | 11+2 | 11+2 | 11+2 |

## Claims

1. Nonwoven fabric (NF), comprising a multi-layer structure comprising

   i) at least one melt blown layer (M) comprising melt blown fibers (MBF) comprising a first propylene polymer (PP1) having a pentad isotacticity (mmmm) of more than 94.1 %, and
   ii) at least one spunbonded layer (S) comprising spunbonded fibers (SBF) comprising a second propylene polymer (PP2) having

a) a pentad isotacticity (mmmm) below 93.7 %,
b) a melting temperature Tm below 164 °C,

wherein the second propylene polymer (PP2) is featured by an amount of 2,1 erythro regio-defects equal or below 0.4 mol.-%, and wherein the second propylene polymer (PP2) is free of phthalic acid esters as well as their respective decomposition products.

2. Nonwoven fabric (NF) according to claim 1, wherein the first propylene polymer (PP1) and/or the second propylene polymer (PP2) are propylene homopolymers.

3. Nonwoven fabric (NF) according to claim 1 or 2, wherein the first propylene polymer (PP1) and/or the second propylene polymer (PP2) are visbroken.

4. Nonwoven fabric (NF) according to any one of the preceding claims, wherein the first propylene polymer (PP1) and/or the second propylene polymer (PP2) fulfil inequation (I)

$$\frac{MFR(final)}{MFR(initial)} > 5 \qquad (I),$$

wherein MFR(final) is the melt flow rate MFR (230 °C) determined according to ISO 1133 after visbreaking and MFR(initial) is the melt flow rate MFR (230 °C) determined according to ISO 1133 before visbreaking.

5. Nonwoven fabric (NF) according to any one of the preceding claims, wherein the first propylene polymer (PP1) has a melt flow rate MFR (230 °C) determined according to ISO 1133 after visbreaking of at least 400 g/10 min.

6. Nonwoven fabric (NF) according to any one of the preceding claims, wherein the second propylene polymer (PP2) has a melt flow rate MFR (230 °C) determined according to ISO 1133 after visbreaking of at least 21 g/10 min.

7. Nonwoven fabric (NF) according to any one of the preceding claims, wherein the first propylene polymer (PP1) has a xylene soluble content (XCS) below 3.1 wt.-%.

8. Nonwoven fabric (NF) according to any one of the preceding claims, wherein

(i) the first propylene polymer (PP1) has a final molecular weight distribution Mw(final)/Mn(final) after visbreaking of at least 2.7, and/or
(ii) the second propylene polymer (PP2) has a final molecular weight distribution Mw(final)/Mn(final) after visbreaking of at least 3.0.

9. Nonwoven fabric (NF) according to any one of the preceding claims, wherein the second propylene polymer (PP2) has been polymerized in the presence of

a) a Ziegler-Natta catalyst (ZN-C2) comprising compounds (TC) of a transition metal of Group 4 to 6 of IUPAC, a Group 2 metal compound (MC) and an internal donor (ID), wherein said internal donor (ID) is a non-phthalic compound, preferably is a non-phthalic acid ester;
b) optionally a co-catalyst (Co), and
c) optionally an external donor (ED).

10. Nonwoven fabric (NF) according to claim 9, wherein

a) the internal donor (ID) is selected from optionally substituted malonates, maleates, succinates, glutarates, cyclohexene-1,2-dicarboxylates, benzoates and derivatives and/or mixtures thereof, preferably the internal donor (ID) is a citraconate;
b) the molar-ratio of co-catalyst (Co) to external donor (ED) [Co/ED] is 5 to 45.

11. Nonwoven fabric (NF) according to any one of the preceding claims, wherein the nonwoven fabric is obtained by

a) producing the first spunbonded layer (S1) by depositing spunbonded fibers (SBF) through a spinneret,

b) optionally producing at least one further spunbonded layer (S) by depositing spunbonded fibers (SBF) on the first spunbonded layer (S1) obtained in step a) through at least one further spinneret, thereby obtaining a multilayered structure comprising two or more, like two or three spunbonded layers (S) in sequence,

c) producing the first melt blown layer (M1) by depositing melt blown fibers (MBF) on the first spunbonded layer (S1) obtained in step a) or on the outermost spunbonded layer (S) obtained in step b) through an extruder, thereby obtaining a multilayered structure comprising one or more, like one, two or three spunbonded layer(s) (S) and a melt blown layer (M) in sequence,

d) optionally producing at least one further melt blown layer (M) by depositing melt blown fibers (MBF) on the first melt blown layer (M1) obtained in step c) through at least one further extruder, thereby obtaining a multilayered structure comprising one or more, like one, two or three spunbonded layer(s) (S) and two or more, like two or three melt blown layer(s) (M) in sequence,

e) producing the second spunbonded layer (S2) by depositing spunbonded fibers (SBF) through a spinneret on the first melt blown layer (M1) obtained in step c) or on the outermost melt blown layer (M) obtained in step d), thereby obtaining a multilayered structure comprising one or more, like one, two or three spunbonded layer(s) (S), one or more, like one, two or three melt blown layer(s) (M), and one spunbonded layer (S) in sequence, and

f) optionally producing at least one further spunbonded layer (S) by depositing spunbonded fibers (SBF) on the second spunbonded layer (S2) obtained in step e) through at least one further spinneret, thereby obtaining a multilayered structure comprising one or more, like one, two or three spunbonded layer(s) (S), one or more, like one, two or three melt blown layer(s) (M), and two or more, like one, two or three spunbonded layer(s) (S) in sequence.

12. Article, comprising the nonwoven fabric (NF) according to any one of the preceding claims.

**Patentansprüche**

1. Vliesstoff (NF), umfassend eine Mehrschichtstruktur, umfassend

i) mindestens eine schmelzgeblasene Schicht (M), umfassend schmelzgeblasene Fasern (MBF), umfassend ein erstes Propylenpolymer (PP1) mit einer Pentadenisotaktizität (mmmm) von mehr als 94,1% und

ii) mindestens eine Spinnvliesschicht (S) aus Spinnvliesfasern (SBF), umfassend ein zweites Propylenpolymer (PP2) mit

a) einer Pentadenisotaktizität (mmmm) unter 93,7%,
b) einer Schmelztemperatur Tm unter 164 ° C,

wobei das zweite Propylenpolymer (PP2) durch eine Menge von 2,1 Erythro-Regio-Defekten von 0,4 Mol-% oder weniger gekennzeichnet ist und wobei das zweite Propylenpolymer (PP2) frei von Phthalsäureestern und ihren jeweiligen Zersetzungsprodukten ist.

2. Vliesstoff (NF) gemäß Anspruch 1, wobei das erste Propylenpolymer (PP1) und/oder das zweite Propylenpolymer (PP2) Propylenhomopolymere sind.

3. Vliesstoff (NF) gemäß Anspruch 1 oder 2, wobei das erste Propylenpolymer (PP1) und/oder das zweite Propylenpolymer (PP2) visbroken sind.

4. Vliesstoff (NF) gemäß einem der vorhergehenden Ansprüche, wobei das erste Propylenpolymer (PP1) und/oder das zweite Propylenpolymer (PP2) die Ungleichung (I) erfüllen

$$\frac{MFR(final)}{MFR(initial)} > 5 \quad \text{(I),}$$

wobei MFR (final) die Schmelze-Fließ-Rate MFR (230°C) gemessen gemäß ISO 1133 nach dem Visbreaking und MFR (initial) die Schmelze-Fließ-Rate MFR (230°C) gemessen gemäß ISO 1133 vor dem Visbreaking ist.

5. Vliesstoff (NF) gemäß einem der vorhergehenden Ansprüche, wobei das erste Propylenpolymer (PP1) eine Schmelze-Fließ-Rate MFR (230°C) gemessen gemäß ISO 1133 nach dem Visbreaking von mindestens 400 g/10 min aufweist.

6. Vliesstoff (NF) gemäß einem der vorhergehenden Ansprüche, wobei das zweite Propylenpolymer (PP2) eine Schmelze-Fließ-Rate MFR (230°C) gemessen gemäß ISO 1133 nach dem Visbreaking von mindestens 21 g/10 min aufweist.

7. Vliesstoff (NF) gemäß einem der vorhergehenden Ansprüche, wobei das erste Propylenpolymer (PP1) einen in Xylol löslichen Gehalt (XCS) unter 3,1 Gew .-% aufweist.

8. Vliesstoff (NF) gemäß einem der vorhergehenden Ansprüche, wobei

(i) das erste Propylenpolymer (PP1) eine finale Molekulargewichtsverteilung Mw (final) / Mn (final) nach dem Visbreaking von mindestens 2,7 aufweist, und/oder
(ii) das zweite Propylenpolymer (PP2) eine finale Molekulargewichtsverteilung Mw (final) / Mn (final) nach dem Visbreaking von mindestens mindestens 3,0 aufweist.

9. Vliesstoff (NF) gemäß einem der vorhergehenden Ansprüche, wobei das zweite Propylenpolymer (PP2) in Gegenwart von

a) einem Ziegler-Natta-Katalysator (ZN-C2), umfassend Verbindungen (TC) eines Übergangsmetalls, der Gruppe 4 bis 6 der IUPAC, einer Metallverbindung der Gruppe 2 (MC) und eines inneren Donors (ID), wobei der innere Donor (ID) eine Nicht-Phthalsäure-Verbindung ist, vorzugsweise ein Nicht-Phthalsäureester ist;
b) gegebenenfalls einem Co-Katalysator (Co) und
c) gegebenenfalls einem äußeren Donor (ED),

polymerisiert wurde.

10. Vliesstoff (NF) gemäß Anspruch 9, wobei

a) der innere Donor (ID) ausgewählt ist aus gegebenenfalls substituierten Malonaten, Maleaten, Succinaten, Glutaraten, Cyclohexen-1,2-dicarboxylaten, Benzoaten und Derivaten und/oder Gemischen davon, vorzugsweise ist der innere Donor (ID) ein Citraconat;
b) das Mol-Verhältnis des Co-Katalysators (Co) zu äußerem Donor (ED) [Co/ED] 5 bis 45 ist.

11. Vliesstoff (NF) gemäß einem der vorhergehenden Ansprüche, wobei der Vliesstoff erhalten wird durch

a) Herstellen der ersten Spinnvliesschicht (S1) durch Abscheiden von Spinnvliesfasern (SBF) durch eine Spinndüse,
b) gegebenenfalls Herstellen mindestens einer weiteren Spinnvliesschicht (S) durch Abscheiden von Spinnvliesfasern (SBF) auf der ersten Spinnvliesschicht (S1), die in Schritt a) durch mindestens eine weitere Spinndüse erhalten wurde, wodurch eine mehrschichtige Struktur erhalten wird, die zwei oder mehr, wie zwei oder drei Spinnvliesschicht(en) (S) nacheinander umfasst,
c) Erzeugen der ersten schmelzgeblasenen Schicht (M1) durch Abscheiden von schmelzgeblasenen Fasern (MBF) auf der ersten in Schritt a) erhaltenen Spinnvliesschicht (S1) oder auf der in Schritt b) erhaltenen äußersten Spinnvliesschicht (S) durch einen Extruder, wodurch eine mehrschichtige Struktur erhalten wird, die eine oder mehrere, wie eine, zwei oder drei, Spinnvliesschicht(en) (S) und eine schmelzgeblasene Schicht (M) nacheinander umfasst,
d) Gegebenenfalls Herstellen mindestens einer weiteren schmelzgeblasenen Schicht (M) durch Abscheiden von schmelzgeblasenen Fasern (MBF) auf der ersten schmelzgeblasenen Schicht (M1), die in Schritt c) durch mindestens einen weiteren Extruder erhalten wurde, wodurch eine mehrschichtige Struktur erhalten wird, die eine oder mehrere, wie eine, zwei oder drei, Spinnvliesschicht(en) (S) und zwei oder mehr, wie zwei oder drei, schmelzgeblasene Schicht(en) (M) nacheinander umfasst,
e) Herstellen der zweiten Spinnvliesschicht (S2) durch Abscheiden von Spinnvliesfasern (SBF) durch eine Spinndüse auf der ersten erhaltenen schmelzgeblasenen Schicht (M1) in Schritt c) oder auf der äußersten schmelzgeblasenen Schicht (M), die in Schritt d) erhalten wurde, wodurch eine mehrschichtige Struktur erhalten wird, die eine oder mehrere, wie eine, zwei oder drei, Spinnvliesschicht(en) (S), eine oder mehrere, wie eine, zwei oder drei, schmelzgeblasene Schicht(en) (M) und eine Spinnvliesschicht (S) nacheinander umfasst, und
f) gegebenenfalls Herstellen mindestens einer weiteren Spinnvliesschicht (S) durch Abscheiden von Spinnvliesfasern (SBF) auf der zweiten Spinnvliesschicht (S2), erhalten in Schritt e) durch mindestens eine weitere Spinndüse, wodurch eine mehrschichtige Struktur erhalten wird, die eine oder mehrere, wie eine, zwei oder drei, Spinnvliesschicht(en) (S), eine oder mehrere, wie eine, zwei oder drei, schmelzgeblasene Schicht(en) (M) und zwei oder mehr, wie eine, zwei oder drei, Spinnvliesschicht(en) (S) nacheinander umfasst.

**12.** Gegenstand, umfassend den Vliesstoff (NF) gemäß einem der vorstehenden Ansprüche.

**Revendications**

**1.** Etoffe non tissée (NF), comprenant une structure multicouche comprenant

i) au moins une couche soufflée à l'état fondu (M) comprenant des fibres soufflées à l'état fondu (MBF) comprenant un premier polymère de propylène (PP1) ayant une isotacticité de pentade (mmmm) supérieure à 94,1 %, et
ii) au moins une couche filée liée (S) comprenant des fibres filées liées (SBF) comprenant un deuxième polymère de propylène (PP2) ayant

a) une isotacticité de pentade (mmmm) inférieure à 93,7 %,
b) un point de fusion Tm inférieur à 164°C,

dans laquelle le deuxième polymère de propylène (PP2) est **caractérisé par** une quantité de régio-défauts érythro 2,1 égale ou inférieure à 0,4 % en moles, et dans laquelle le deuxième polymère de propylène (PP2) est exempt d'esters d'acide phtalique ainsi que de leurs produits de décomposition respectifs.

**2.** Etoffe non tissée (NF) selon la revendication 1, dans laquelle le premier polymère de propylène (PP1) et/ou le deuxième polymère de propylène (PP2) sont des homopolymères de propylène.

**3.** Etoffe non tissée (NF) selon la revendication 1 ou 2, dans laquelle le premier polymère de propylène (PP1) et/ou le deuxième polymère de propylène (PP2) sont viscoréduits.

**4.** Etoffe non tissée (NF) selon l'une quelconque des revendications précédentes, dans laquelle le premier polymère de propylène (PP1) et/ou le deuxième polymère de propylène (PP2) satisfont à l'inégalité (I)

$$\frac{MFR\ (final)}{MFR\ (initial)} > 5 \qquad (I)$$

dans laquelle MFR(final) est l'indice de fluage MFR (230°C), déterminé conformément à la norme ISO 1133, après viscoréduction, et MFR(initial) est l'indice de fluage MFR (230°C), déterminé conformément à la norme ISO 1133, avant viscoréduction.

**5.** Etoffe non tissée (NF) selon l'une quelconque des revendications précédentes, dans laquelle le premier polymère de propylène (PP1) a un indice de fluage MFR (230°C), déterminé conformément à la norme ISO 1133 après viscoréduction, d'au moins 400 g/10 min.

**6.** Etoffe non tissée (NF) selon l'une quelconque des revendications précédentes, dans laquelle le deuxième polymère de propylène (PP2) a un indice de fluage MFR (230°C), déterminé conformément à la norme ISO 1133 après viscoréduction, d'au moins 21 g/10 min.

**7.** Etoffe non tissée (NF) selon l'une quelconque des revendications précédentes, dans laquelle le premier polymère de propylène (PP1) a une teneur soluble dans le xylène (XCS) inférieure à 3,1 % en poids.

**8.** Etoffe non tissée (NF) selon l'une quelconque des revendications précédentes, dans laquelle

(i) le premier polymère de propylène (PP1) a une distribution des masses moléculaires finales Mw(finale)/ Mn(finale) après viscoréduction d'au moins 2,7, et/ou
(ii) le deuxième polymère de propylène (PP2) a une distribution des masses moléculaires finales Mw(finale)/ Mn(finale) après viscoréduction d'au moins 3,0.

9.  Etoffe non tissée (NF) selon l'une quelconque des revendications précédentes, dans laquelle le deuxième polymère de propylène (PP2) a été polymérisé en présence de

    a) un catalyseur de Ziegler-Natta (ZN-C2) comprenant des composés (TC) d'un métal de transition des Groupes 4 à 6 de l'IUPAC, un composé d'un métal du Groupe 2 (MC) et un donneur interne (ID), dans lequel ledit donneur interne (ID) est un composé non phtalique, de préférence un ester d'acide non phtalique,
    b) optionnellement un co-catalyseur (Co), et
    c) optionnellement un donneur externe (ED).

10. Etoffe non tissée (NF) selon la revendication 9, dans laquelle

    a) le donneur interne (ID) est choisi parmi les malonates, maléates, succinates, glutarates, cyclohexène-1,2-dicarboxylates, benzoates, optionnellement substitués, et leurs dérivés et/ou mélanges, de préférence le donneur interne (ID) est un citraconate ;
    b) le rapport molaire du co-catalyseur (Co) sur le donneur externe (ED) [Co/ED] est de 5 à 45.

11. Etoffe non tissée (NF) selon l'une quelconque des revendications précédentes, dans laquelle l'étoffe non tissée est obtenue par

    a) production de la première couche filée liée (S1) par déposition de fibres filées liées (SBF) par l'intermédiaire d'une filière,
    b) optionnellement production d'au moins une autre couche filée liée (S) par déposition de fibres filées liées (SBF) sur la première couche filée liée (S1) obtenue dans l'étape a) par l'intermédiaire d'au moins une autre filière, ce qui donne ainsi une structure multicouche comprenant deux ou plus de deux, comme deux ou trois couches filées liées (S) en séquence,
    c) production de la première couche soufflée à l'état fondu (M1) par déposition de fibres soufflées à l'état fondu (MBF) sur la première couche filée liée (S1) obtenue dans l'étape a) ou sur la couche filée liée la plus extérieure (S) obtenue dans l'étape b) par l'intermédiaire d'une extrudeuse, ce qui donne ainsi une structure multicouche comprenant une ou plusieurs, comme une, deux ou trois couches filées liées (S) et une couche soufflée à l'état fondu (M) en séquence,
    d) optionnellement production d'au moins une autre couche soufflée à l'état fondu (M) par déposition de fibres soufflées à l'état fondu (MBF) sur la première couche soufflée à l'état fondu (M1) obtenue dans l'étape c) par l'intermédiaire d'au moins une autre extrudeuse, ce qui donne ainsi une structure multicouche comprenant une ou plusieurs, comme une, deux ou trois couches filées liées (S) et deux ou plus de deux, comme deux ou trois couches soufflées à l'état fondu (M) en séquence,
    e) production de la deuxième couche filée liée (S2) par déposition de fibres filées liées (SBF) par l'intermédiaire d'une filière sur la première couche soufflée à l'état fondu (M1) obtenue dans l'étape c) ou sur la couche soufflée à l'état fondu la plus extérieure (M) obtenue dans l'étape d), ce qui donne ainsi une structure multicouches comprenant une ou plusieurs, comme une, deux ou trois couches filées liées (S), une ou plusieurs, comme une, deux ou trois couches soufflées à l'état fondu (M), et une couche filée liée (S) en séquence, et
    f) optionnellement production d'au moins une autre couche filée liée (S) par déposition de fibres filées liées (SBF) sur la deuxième couche filée liée (S2) obtenue dans l'étape e) par l'intermédiaire d'au moins une autre filière, ce qui donne ainsi une structure multicouches comprenant une ou plusieurs, comme une, deux ou trois couches filées liées (S), une ou plusieurs, comme une, deux ou trois couches soufflées à l'état fondu (M), et deux ou plus de deux, comme une, deux ou trois couches filées liées (S) en séquence.

12. Article comprenant l'étoffe non tissée (NF) selon l'une quelconque des revendications précédentes.

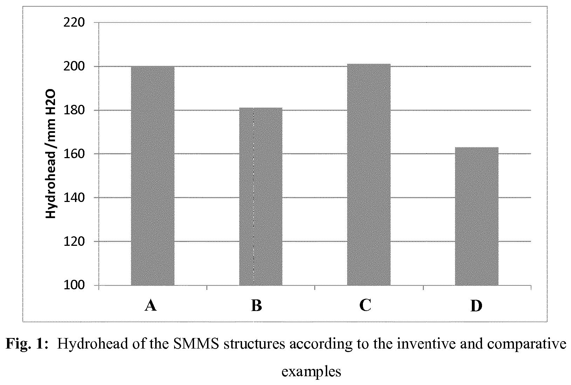

**Fig. 1:** Hydrohead of the SMMS structures according to the inventive and comparative examples

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008275180 A1
- WO 2016008749 A1
- EP 2682505 A1
- EP 887379 A
- EP 887380 A
- EP 887381 A
- EP 991684 A
- EP 0887379 A
- WO 9212182 A
- WO 2004000899 A

- WO 2004111095 A
- WO 9924478 A
- WO 9924479 A
- WO 0068315 A
- WO 2012007430 A
- EP 2610271 A
- EP 261027 A
- EP 2610272 A
- EP 1028984 A
- WO 006831 A

**Non-patent literature cited in the description**

- **HANS ZWEIFEL.** Plastic Additives Handbook. 2001, 871-873
- **BUSICO, V. ; CIPULLO, R.** *Prog. Polym. Sci.,* 2001, vol. 26, 443
- **BUSICO, V. ; CIPULLO, R. ; MONACO, G. ; VAC-ATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225

- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMON-TESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17
- *CHEMICAL ABSTRACTS,* 1592-23-0
- *CHEMICAL ABSTRACTS,* 6683-19-8